(19)

Europäisches
Patentamt
European
Patent Office
Office européen
des brevets

(11) **EP 2 804 332 A1**

(12) **EUROPEAN PATENT APPLICATION**

(43) Date of publication:
**19.11.2014 Bulletin 2014/47**

(51) Int Cl.:
*H04B 7/08* (2006.01)      *H04B 7/04* (2006.01)
*H04L 25/03* (2006.01)

(21) Application number: **13167561.3**

(22) Date of filing: **13.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited**
**Waterloo, ON N2K 0A7 (CA)**

(72) Inventors:
• **Leach, Martin, Geoffrey**
**Harston, Cambridge, CB22 7GG (GB)**

• **Liang, Yangwen**
**Waterloo, Ontario, N2L 3W8 (CA)**
• **Nezampour Meymandi, Ali**
**Ottawa, Ontario, K2K 3KI (CA)**
• **Weng, Jianfeng**
**Kanata, Ontario, K2K 3KI (CA)**

(74) Representative: **Carpmaels & Ransford LLP**
**One Southampton Row**
**London WC1B 5HA (GB)**

(54) **Method and system for symbol detection using matrix decomposition**

(57)    This application proposes using successive interference cancellation with an ordered matrix decomposition coupled with a search based ordered layer detection technique. The search based ordered layer detection technique is used to consider a plurality of hypothesis decision estimates for detection of symbols in multiple data streams.

**FIG. 10**

**Description**

The application relates to symbol detection using matrix decomposition.

In 3GPP Long Term Evolution (LTE) and LTE advanced (LTE-A), multiple antennas are utilized to achieve higher data rates and/or better reliability for transmission and reception of signals. In such a multiple-input-multiple-output (MIMO) system, a possible transmission mode is spatial multiplexing (SM) of multiple streams (also referred to in the field as "layers") of data which can support a peak downlink rate of 150 Mbps for Category 4 User Equipments (UEs) having 2 receive antennas, 300 Mbps for Category 5/6/7 UEs having 4 receive antennas, and 1200 Mbps for Category 8 UEs having 8 receive antennas, respectively. Equalizer design for the UE receivers is important to achieve such high throughputs. Several different equalization techniques have been proposed for MIMO systems such as maximum likelihood detector (MLD), zero-forcing equalizer (ZF) and minimum mean squared error equalizer (MMSE). MLD is a nonlinear technique and is considered as an optimum equalization technique among all realizable equalizers. However, a major drawback of MLD is its extremely high computational complexity for large constellation sizes and multiple data streams. The high computational complexity makes the MLD extremely expensive to implement for large constellation sizes and large number of data streams. ZF is a linear equalizer and it is much easier to implement as compared with the MLD. However, ZF often suffers from a noise amplification problem, which can be alleviated by the MMSE equalizer at little extra expense on the computational complexity.

An equalizer for use in communication systems that is less computationally intensive and reduces noise amplification may be beneficial.

This application proposes using successive interference cancellation with an ordered matrix decomposition coupled with a search based ordered layer detection technique, which is used to consider a plurality of hypothesis decision estimates for detection of symbols in multiple data streams (or layers). Those symbols may also be known as layer symbols.

According to an aspect of the application, there is provided a method for detecting symbols in a number of received antenna signals formed from a transmission channel and a number of transmitted data streams, the method comprising: performing matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order; generating a plurality of symbol decision sets, in which each symbol decision set includes a symbol decision estimate for a transmitted symbol on each data stream and the symbol decision estimates are determined based on the resulting matrix and in the predefined order; and based on a selection criterion, selecting a single symbol decision set, in which each symbol decision estimate is considered to be representative of a symbol in a given transmitted data stream.

According to some embodiments, the method further comprising estimating the transmission channel from the received antenna signals.

According to some embodiments, performing matrix decomposition of a channel matrix estimate comprises: decomposing the channel matrix estimate into an orthogonal matrix and a triangular matrix according to a predefined diagonal-magnitude order, wherein permuting columns of the channel matrix estimate causes the magnitude of each element on a main diagonal of the triangular matrix to be arranged in the predefined diagonal-magnitude order; and permuting a vector representing the symbol decision set during the matrix decomposition in a manner consistent with the permuting of the columns of the channel matrix estimate, which enables the order of determining the symbol decision estimates in the symbol decision set to be the predefined diagonal-magnitude order.

According to some embodiments, the triangular matrix is either: an upper triangular matrix, for which the matrix decomposition is QR decomposition and the order of determining the symbol decision estimates is in a reverse order as compared to the predefined diagonal-magnitude order; or a lower triangular matrix, for which the matrix decomposition is QL decomposition and order of determining the symbol decision estimates is in the same predefined diagonal-magnitude order.

According to some embodiments, the predefined diagonal-magnitude order is at least one of: a descending diagonal-magnitude order with the magnitude of each element on the main diagonal of the triangular matrix decreasing from the first column to the last column; an ascending diagonal-magnitude order with the magnitude of each element on the main diagonal of the triangular matrix increasing from the first column to the last column; and a maximized diagonal-magnitude ordering with the magnitude of each element on the main diagonal of the triangular matrix being maximized by permuting the columns of the channel estimate matrix and the orthogonal matrix which correspond to elements on the main diagonal that are not yet maximized.

According to some embodiments, the method further comprises: noise-decorrelating the received antenna signals; and rotating the noise-decorrelated signal by using an orthogonal matrix from the matrix decomposition of the channel matrix estimate.

According to some embodiments, decomposing the channel matrix estimate into the orthogonal matrix and the triangular matrix according to a predefined diagonal-magnitude order comprises performing a single matrix decomposition.

According to some embodiments, generating a plurality of symbol decision sets further comprises: selecting a number of data streams for which symbol decision estimates will be determined based on selection of symbol decision hypotheses; for each data stream that symbol decision estimates will be determined based on selection of symbol decision hypotheses, determining at least two possible symbol decision hypotheses based on a symbol decision estimate of that data stream; forming a symbol decision set by: selecting the symbol decision hypotheses for each data stream in which symbol decisions are based on symbol decision hypotheses; and based on the selected symbol decision hypotheses, further determining one value for each remaining symbol decision estimate in the symbol decision set.

According to some embodiments, determining at least two possible symbol decision hypotheses based on the symbol decision estimate of that data stream comprises one of: determining a set of signal points comprising all of the signal points of a signal constellation used for transmitting the transmitted symbols as symbol decision hypotheses for a given transmitted data stream; or determining a subset of signal points of a signal constellation used for transmitting the transmitted symbols as symbol decision hypotheses for the given transmitted data stream, the subset of signal points neighboring a symbol decision estimate.

According to some embodiments, determining the subset of the signal points of the signal constellation comprises: determining the subset of signal points in the signal constellation within a radius d of the symbol decision estimate; or wherein when the signal constellation has been divided into a plurality of subsets of signal points, each subset being associated with a signal point for a lower order signal constellation, determining one subset of signal points within the plurality of subsets, the one subset being selected based on the signal point of the lower order signal constellation that is closest to the symbol decision estimate.

According to some embodiments, further determining one value for each remaining symbol decision estimate in the symbol decision set comprises: determining each symbol decision estimate by performing successive interference cancellation (SIC).

According to some embodiments, performing SIC comprises: for a symbol decision estimate in a symbol decision set, performed in the symbol decision order associated with the predefined diagonal-magnitude order; reconstructing an interference portion caused by previously determined symbol decision estimates; subtracting the reconstructed interference portion from the corresponding signal element of the rotated and noise-decorrelated received signal, which is obtained by noise-decorrelating the received antenna signals followed by rotating the noise-decorrelated received signal using an orthogonal matrix from the matrix decomposition of the channel matrix estimate; and determining a symbol decision estimate based on the corresponding interference subtracted signal element.

According to some embodiments, determining a symbol decision estimate based on the corresponding interference subtracted signal element comprises: determining a symbol decision by mapping the corresponding interference subtracted signal element to a signal point in a constellation used for transmitting the transmitted symbols; and when the symbol decision is for a data stream in which symbol decision estimates are based on symbol decision hypotheses, determining at least two signal points in a constellation used for transmitting the transmitted symbols for the symbol decision hypotheses.

According to some embodiments, determining a single symbol decision set comprises: for each of the symbol decision sets in the plurality of the symbol decision sets, determining a selection criterion as a likelihood measure between the symbol decision set and the transmitted symbols; and based on the likelihood measure for each of the plurality of symbol decision sets, selecting a single symbol decision set to be representative of the transmitted symbols.

According to some embodiments, determining a single symbol decision set further comprises: permuting a vector representing the symbol decisions in order to reverse the permuting performed during the matrix decomposition.

According to a further aspect of the application, there is provided a wireless communication device comprising: a plurality of receive antennas configured to receive symbols formed from a transmission channel and a number of transmitted data streams; a symbol detector configured to: perform matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order; generate a plurality of symbol decision sets, in which each symbol decision set includes a symbol decision estimate for a transmitted symbol on each data stream and the symbol decision estimates are determined based on the resulting matrix and in the predefined order; and based on a selection criterion, select a single symbol decision set, in which each symbol decision estimate is considered to be representative of a symbol in a given transmitted data stream.

According to some embodiments, the symbol detector is further configured to estimate the transmission channel from the received antenna signals.

According to some embodiments, the wireless communication device is a base station, a relay station or user equipment (UE).

According to some embodiments, the wireless communication device is further configured to perform methods described above or detailed below.

According to another aspect of the application, there is provided a computer-readable medium having stored thereon computer executable instructions, that when executed by a processor, cause the processor to perform a method, the method comprising: performing (10-1) matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order; generating (10-2) a plurality of symbol decision sets, in which each symbol decision set includes a symbol decision estimate for a transmitted symbol on each data stream and the symbol decision estimates are determined based on the resulting matrix and in the predefined order; and based on a selection criterion, selecting (10-3) a single symbol decision set, in which each symbol decision estimate is considered to be representative of a symbol in a given transmitted data stream.

According to some embodiments, the computer-executable instructions further comprise instructions for estimating the transmission channel from the received antenna signals.

Other aspects and features of the present application will become apparent to those ordinarily skilled in the art upon review of the following description of specific embodiments of the application in conjunction with the accompanying figures.

Embodiments of the application will now be described with reference to the attached drawings in which:

Fig. 1 is a block diagram of a multiple input multiple output (MIMO) communication system;

Fig. 2 is a schematic diagram of a signal constellation in which a set of signal points located within distance $d$ from an estimated symbol after equalization to identify a group of hypotheses;

Fig. 3 is a schematic diagram of a signal constellation using decimation of the entire signal constellation to divide up the signal constellation with $N = 16$ to identify a group of hypotheses;

Fig. 4 is a graphical plot of symbol error rate for QPSK modulation with 4x4 MIMO in Rayleigh fading including several plots that have been determined based on computer simulations using embodiments described in the application;

Fig. 5 is a graphical plot of symbol error rate for 16QAM modulation with 4x4 MIMO in Rayleigh fading including several plots that have been determined based on computer simulations using embodiments described in the application;

Fig. 6 is a graphical plot of symbol error rate for 64QAM modulation with 4x4 MIMO in Rayleigh fading including several plots that have been determined based on computer simulations using embodiments described in the application;

Fig. 7 is a graphical plot of symbol error rate for QPSK modulation with 8x8 MIMO in Rayleigh fading including several plots that have been determined based on computer simulations using embodiments described in the application;

Fig. 8 is a graphical plot of symbol error rate for 16QAM modulation with 8x8 MIMO in Rayleigh fading including several plots that have been determined based on computer simulations using embodiments described in the application;

Fig. 9 is a graphical plot of symbol error rate for 64QAM modulation with 8x8 MIMO in Rayleigh fading including several plots that have been determined based on computer simulations using embodiments described in the application;

Fig. 10 is a flow chart illustrating a method according to an embodiment of the application;

Fig. 11 is a block diagram of an example mobile device according to an implementation described herein; and

Fig. 12 is a block diagram of another wireless device.

Method and devices described in the present application may be used with any radio access technology that supports spatial multiplexing (SM). This includes, but is not limited to, the following technologies: LTE / LTE-A (E-UTRA); IEEE 802.16 (WiMAX); and IEEE 802.11 (WiFi).

In order to illustrate the proposed concepts, LTE-A (E-UTRA) Release 10 is primarily considered within this application.

While reference is made below to an E-UTRA user equipment (UE) or device, it is to be considered that more generally a UE can be a wireless communication device that is compatible with any wireless communication system. The UE may be, but is not limited to, a fixed or mobile wireless terminal, a cellular telephone, a wirelessly enabled computer, a wirelessly enabled gaming machine or a personal data assistant (PDA).

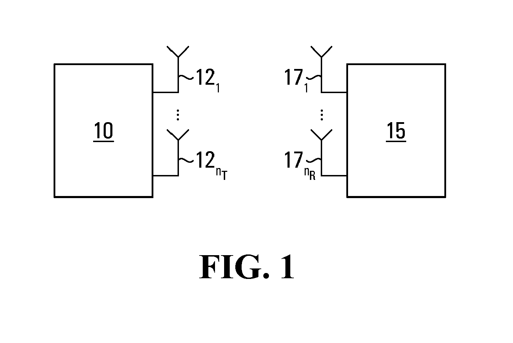

Fig. 1 illustrates an example MIMO communication system having two network elements. A first network element 10, which may for example be a base station, has $n_T$ transmit antennas from $12_1$ to $12\,n_T$. A second network element 15, which may for example be a wireless terminal, has $n_R$ receive antennas from $17_1$ to $17\,n_R$.

The transmitted and received signals can be represented in a matrix or vector format for the purposes of performing mathematical operations on the transmitted and received signals. A transmitted signal may be represented as a vector. The channel over which the transmitted signal propagates from the transmit antennas to the received antennas can be represented by a channel matrix of which the size is determined by the number of receive antennas by the number of transmit antennas. The received signal is then represented by the channel matrix multiplied by the transmitted signal vector. Other factors such as noise may also be factored into the equation to arrive at a representative value of the received signal. The following notations are also adhered to in the subsequent discussion: E{.} denotes statistical expectation, $\mathbf{I}_n$ is $n \times n$ identity matrix, $\mathbf{0}_{n \times m}$ is nxm all-zero matrix, $\mathbf{X}^{-1}$ is an inverse of matrix $\mathbf{X}$, and $\mathbf{X}^H$ denotes a Hermitian transpose of matrix $\mathbf{X}$. For a given vector $\mathbf{x}$, $\|\mathbf{x}\|^2$ denotes the norm of $\mathbf{x}$, i.e., a sum of squares of elements in vector $\mathbf{x}$.

Referring to the example of Fig. 1, the received baseband signal at the second network element 15 can be defined by

$$\mathbf{r} = \mathbf{H}_{ch} \mathbf{P} \mathbf{A} \mathbf{x} + \mathbf{z} \qquad (1)$$

where vector $\mathbf{x}$ contains $n_L$ complex-valued transmitted layer symbols with normalized transmit symbol energy of 1 and $\mathbf{A}$ is a diagonal matrix accounting for the amplitudes of layer symbols. The $k$-th element for $k = 1,...,n_L$ in matrix $\mathbf{A}$ can be given by $\sqrt{E_k}$, where $E_k$ is the transmit symbol energy for the $k$-th layer symbol. Here, $n_L$ is the number of layer symbols. Channel matrix $\mathbf{H}_{ch}$ contains channel gains $\{h_{ch,ij}, i = 1,...,n_R, j = 1,...,n_T\}$ from $n_T$ transmit antennas to $n_R$ receive antennas, where $h_{ch,ij}$ is a channel gain from transmit antenna j to receive antenna i. $\mathbf{P}$ is a precoding matrix with size $n_T \times n_L$. The vector $\mathbf{z}$ is a noise vector observed at receive antennas that is assumed to have a Gaussian distribution with a covariance matrix $\sigma_n^2 \mathbf{R}_{zz}$, where $\sigma_n^2 = N_0$ denotes a noise variance, where $N_0$ is a noise spectrum density. At the second network element 15, the noise covariance matrix $\sigma_n^2 \mathbf{R}_{zz}$ can be estimated and as such the noise vector z may be decorrelated by multiplying a noise-decorrelating matrix $\mathbf{R}_{zz}^{-1/2}$ with r which results in a noise-decorrelated received signal vector

$$\mathbf{y} = \mathbf{R}_{zz}^{-1/2} \mathbf{r} = \mathbf{H}\mathbf{x} + \mathbf{n} \qquad (2)$$

where matrix $\mathbf{H} = \mathbf{R}_{zz}^{-1/2} \mathbf{H}_{ch} \mathbf{P} \mathbf{A}$ can be considered as an effective MIMO channel matrix after noise decorrelation and decorrelated noise vector $\mathbf{n}$ has a covariance matrix $\sigma_n^2 \mathbf{I}_{n_R}$. In the spatial multiplexing transmission mode, the transmitted vector contains modulated symbols from multiple independent data streams, also known as layers. These symbols are referred to as layer symbols. The number of data streams or layers, i.e., $n_L$, can be up to $\min\{n_T, n_R\}$. In other words, $n_L \leq \min\{n_T, n_R\}$. For a given layer, say layer $k$, the set of all possible layer symbols for this layer is referred to as the signal constellation alphabet of layer $k$ and denoted by $C_k$. At the second network element 15, it is known for people ordinarily skilled in the art that the effective channel matrix $\mathbf{H}$ can be also estimated based on for example training symbols or pilots. The effective channel matrix estimate is denoted by $\tilde{\mathbf{H}}$.

Maximum Likelihood Detection (MLD)

When performing equalization using the maximum likelihood criterion, a decision rule for selecting a most likely symbol decision estimate from a full set $S_{full}$ of layer symbols is given by

$$\hat{\mathbf{x}} = \arg\min_{\mathbf{x} \in S_{full}} \left\| \mathbf{y} - \tilde{\mathbf{H}} \mathbf{x} \right\|^2 \qquad (3)$$

In Eq. (3), $S_{full}$ is the set of all possible values of layer symbol vector **x**, $\tilde{\mathbf{H}}$ is an effective channel matrix estimate and $\tilde{\mathbf{x}}$ is an estimate of layer symbol vector **x**. The effective channel matrix estimate $\tilde{\mathbf{H}}$ can be considered as a channel matrix estimate representative of the transmission channel from a vector of transmitted layer symbols **x** to the vector of the noise-decorrelated received antenna signals **y.**

When the transmitted layer symbols are assumed equal-probable, MLD can be considered as an optimal detection technique in terms of offering the best detection performance. However, using MLD requires a search over all possible combinations of layer symbols in vector **x,** which may be impractical for a high number of layers (4 layers or higher) and/or a high order modulation (for example 64 QAM or 256 QAM). Techniques that have been proposed as an alternative to MLD due to the high computational complexity of MLD include zero-forcing (ZF) linear equalizer, minimum mean square error (MMSE) linear equalizer, successive interference cancellation (SIC), or other similar techniques. These techniques trade off some level of performance for a lower complexity in implementation.

Zero-Forcing (ZF) Linear Equalizer

In a ZF linear equalizer, the noise-decorrelated received vector **y** is pre-multiplied by a pseudo inverse of the effective channel matrix defined as $\mathbf{G}_{ZF} = (\tilde{\mathbf{H}}^H\tilde{\mathbf{H}})^{-1}\tilde{\mathbf{H}}^H$, which results in the expression for the equalized signal vector **y** $_{ZFeq}$ given by

$$\mathbf{y}_{ZFeq} = \mathbf{G}_{ZF}\,\mathbf{y} = (\tilde{\mathbf{H}}^H\tilde{\mathbf{H}})^{-1}\tilde{\mathbf{H}}^H\mathbf{y} \tag{4}$$

and then based on **y** $_{ZFeq}$ detection is performed for all layers independently. It is well-known that the ZF linear equalizer has a potential to amplify noise. That can be addressed to some extent by the MMSE linear equalizer.

Minimum Mean Square Error (MMSE) Linear Equalizer

The output of an MMSE linear equalizer is given by **y** $_{MMSEeq}$ =**G** $_{MMSE}$ **y**, where the equalizer matrix **G** $_{MMSE}$ can be defined by

$$\mathbf{G}_{MMSE} = (\tilde{\mathbf{H}}^H\tilde{\mathbf{H}} + \sigma_n^2\mathbf{I}_{n_L})^{-1}\tilde{\mathbf{H}}^H \tag{5}$$

It is clear that unlike the ZF linear equalizer, the MMSE linear equalizer takes noise variance into account. Therefore, the performance of the MMSE linear equalizer is better than the ZF linear equalizer for low values of SNR (i.e., when the ratio $E_k/N_o$ is small and the original channel gains $|h_{ch,ij}|^2$ presumably is 1), but Eq. (5) converges to Eq. (4) as $\sigma_n^2 \rightarrow 0$ for high values of SNR. It may be considered that the MMSE linear equalizer can be viewed as a ZF linear equalizer for a system with an effective channel matrix defined as $\begin{bmatrix} \tilde{\mathbf{H}} \\ \sigma_n\mathbf{I}_{n_L} \end{bmatrix}$ and a noise-decorrelated received signal vector defined as $\begin{bmatrix} \mathbf{y} \\ \mathbf{0}_{n_L \times 1} \end{bmatrix}$, where $\mathbf{0}_{n_L \times 1}$ is a column vector of $n_L$ zeros.

ZF-SIC Equalizer

A Zero-forcing (ZF) linear equalizer can work in conjunction with successive interference cancellation (SIC). The resulting ZF-SIC equalizer can have a better detection performance than the ZF linear equalizer. For a given received signal with multiple layer symbols to be detected, SIC involves selecting one layer symbol, making a symbol decision for the selected layer symbol, reconstructing the interference portion contributed by the symbol decision (i.e., the detected layer), subtracting the reconstructed interference portion from the received signal, selecting next layer symbol to make another symbol decision, and so on.

Due to the sequential nature of this technique, overall performance depends on the order in which the layers are selected for detection. One method for choosing the detection order is to apply matrix factorization and determine the order based on the decomposed matrix. A particular example of matrix factorization is QR factorization, also known as QR decomposition. For a given matrix **M**, QR factorization is factorization or decomposition of **M** into a product, i.e., **M** = **QR**, with **Q** being an orthogonal rotational matrix and **R** an upper triangular matrix.

A similar factorization can be performed factoring the matrix **M** into an orthogonal rotational matrix **Q** and a lower triangular matrix **L**. While the majority of the description pertains to QR decomposition with a layer symbol detection order from layer $k = n_L$ to $k = 1$, it is to be understood that a similar approach could be implemented using QL decomposition but with a layer symbol detection order from layer $k = 1$ to $k = n_L$.

In the ZF-SIC, the QR decomposition is performed directly on the effective channel matrix estimate $\tilde{\mathbf{H}}$ with size $n_R \times n_L$ such that $\tilde{\mathbf{H}} = \mathbf{QR}$.

As mentioned above, **Q** is an orthogonal matrix with size $n_R \times n_L$ and $\mathbf{Q}^H\mathbf{Q} = \mathbf{I}_{n_L}$, and **R** is an upper triangular matrix with size $n_L \times n_L$. Note that QR decomposition can also be performed in a way that results in matrices **Q** and **R** having sizes $n_R \times n_R$ and $n_R \times n_L$, respectively. Either approach can be employed for the purpose of this presentation. Furthermore, if we denote a channel estimation error matrix as $\Delta\mathbf{H} = \mathbf{H} - \tilde{\mathbf{H}}$, the noise-decorrelated received signal vector **y** from Eq. (2) can be re-written into this form,

$$\mathbf{y} = \tilde{\mathbf{H}}\mathbf{x} + \Delta\mathbf{H}\,\mathbf{x} + \mathbf{n} = \tilde{\mathbf{H}}\mathbf{x} + \tilde{\mathbf{n}} \tag{6}$$

In Eq. (6), $\tilde{\mathbf{n}} = \Delta\mathbf{H}\,\mathbf{x} + \mathbf{n}$ is a noise vector including the contribution $\Delta\mathbf{H}\,\mathbf{x}$ from the channel estimation error $\Delta\mathbf{H}$ multiplying the symbol vector **x.** Thus, multiplying both sides of Eq. (6) by $\mathbf{Q}^H$ to rotate vector **y** provides the following rotated vector **v**

$$\mathbf{v} = \mathbf{Q}^H\mathbf{y} = \mathbf{R}\mathbf{x} + \mathbf{Q}^H\tilde{\mathbf{n}} = \mathbf{R}\,\mathbf{x} + \mathbf{w}\,. \tag{7}$$

In Eq. (7), $\mathbf{w} = \mathbf{Q}^H\tilde{\mathbf{n}}$ is a rotated noise vector. As **R** is an upper triangular matrix, the interference observed at layer $k$ is $I_k = \sum_{m=k+1}^{n_L} r_{km}\, x_m$ and the rotated element $v_k$ can be written as $v_k = r_{kk}\, x_k + I_k + w_k$, where $W_k$ is the $k$-th noise element of noise vector **w.** The last layer, i.e., layer $k = n_L$ does not experience any interference and therefore can be detected first. In other words, a symbol decision estimate for layer symbol $k = n_L$ can be determined. For each of subsequent layers, the interference from the previously detected layers can be reconstructed based on the determined symbol decision estimates and then subtracted. After that, a symbol decision estimate for the current layer can be determined. In other words, at layer $k$, a symbol decision estimate $\hat{x}_k$ for layer symbol $x_k$ can be determined from $k = n_L$ down to $k = 1$ as

$$\hat{x}_k = \operatorname*{slice}_{C_k}\left\{\frac{1}{r_{kk}}\left(v_k - \hat{I}_k\right)\right\}\,,\text{for}\quad k = n_L, n_L - 1,...,1 \tag{8}$$

where $v_k$ is the $k$-th element in vector **v**, $\hat{I}_k = \sum_{m=k+1}^{n_L} r_{km}\,\hat{x}_m$ is a reconstructed interference portion from previously determined symbol estimates $\{\hat{x}_m,\, m = n_L, n_L - 1, ..., k + 1\}$, and the slice{s} function is used to select in the underlying

signal constellation set $C_k$ a nearest signal point to s. More generally, slice{s} is a mapping function which maps the input "s" to a symbol decision estimate. For $k = n_L$ in Eq. (8), the interference portion $\hat{I}_{n_L}$ is set to zero as there is no known interference to be reconstructed. For numerical stability, when $r_{kk}$ is very small, i.e., $r_{kk} \leq \varepsilon$, where $\varepsilon$ is a predefined small positive number, $r_{kk}$ may be set to $\varepsilon$ in Eq. (8) or the symbol decision estimate $\hat{x}_k$ may be set to 0.

From Eq. (8), if the symbol decision estimates from the previously detected layers are correct $\{\hat{x}_m = x_m$ for $m = k + 1,...,n_L\}$, interference portion can be completely removed such that $v_k - \hat{I}_k = r_{kk} x_k + w_k$. An error on one or more of the previously determined symbol decision estimates will lead to $I_k$ being different than $\hat{I}_k$, which may result in erroneous symbol detection at the current layer as well as at the subsequent layers. This is known as error propagation issue, which is a common issue in the SIC whenever there is a wrong symbol decision estimate at layers being detected earlier.

The detection order used here, i.e., the order of determining symbol decision estimates is also referred to as symbol-decision order.

A better detection order for the layers may be to first detect the strongest layer and subtract the interference of that layer from $v_k$ for weaker layers. There are different methods to determine the detection order. The ZF-SIC equalizer with a determined detection order is referred to as ZF-SIC-Ordered.

MMSE-SIC Equalizer

The MMSE equalizer can also work together with the SIC. The resulting MMSE-SIC is similar to the ZF-SIC described above except that the QR factorization is formed by decomposing $\begin{bmatrix} \tilde{\mathbf{H}} \\ \sigma_n \mathbf{I}_{n_L} \end{bmatrix} = \mathbf{Q}_{\text{MMSE}} \mathbf{R}$  and defining $\mathbf{Q}$

as the first $n_R$ rows of $\mathbf{Q}_{\text{MMSE}}$, such that $\mathbf{H} = \mathbf{QR}$. MMSE-SIC with a determined detection order is referred to as MMSE-SIC-Ordered.

SIC with ordered QR factorization

As mentioned previously, detection performance when using SIC depends on the order in which the layers are detected and the interference subtraction that is performed. The following shows how the detection order can be changed by permuting elements of the received version of transmitted layer symbol vector **x** and the corresponding columns of channel matrix estimate **H** prior to the QR factorization. Such reordering can be done by introducing a permutation matrix **T** having an inverse $\mathbf{T}^{-1} = \mathbf{T}^H$. As a result, the noise-decorrelated received signal vector can be rewritten as

$$\mathbf{y} = \tilde{\mathbf{H}}\mathbf{x} + \tilde{\mathbf{n}} = \tilde{\mathbf{H}}\mathbf{TT}^H\mathbf{x} + \tilde{\mathbf{n}} = \underline{\tilde{\mathbf{H}}}\underline{\mathbf{x}} + \tilde{\mathbf{n}} \qquad (9)$$

where $\underline{\mathbf{H}} = \tilde{\mathbf{H}}\mathbf{T}$ is a permuted channel matrix estimate and $\underline{\mathbf{x}} = \mathbf{T}^H\mathbf{x}$ is the permuted layer symbol vector. More generally, the underline notation in this document denotes a permutated vector or matrix.

QR factorization performed on the permuted channel matrix estimate can be based on $\underline{\tilde{\mathbf{H}}} = \mathbf{QR}$ for a ZF scheme

or $\begin{bmatrix} \underline{\tilde{\mathbf{H}}} \\ \sigma_n \mathbf{I}_{n_L} \end{bmatrix} = \mathbf{Q}_{\text{MMSE}} \mathbf{R}$  and then $\underline{\tilde{\mathbf{H}}} = \mathbf{QR}$ by choosing $\mathbf{Q}$ as the first $n_R$ rows of $\mathbf{Q}_{\text{MMSE}}$ for an MMSE scheme.

The next step is to multiply both sides of Eq. (9) by $\mathbf{Q}^H$ to obtain a rotated vector

$$\mathbf{v} = \mathbf{Q}^H\mathbf{y} = \mathbf{Q}^H\mathbf{QR}\underline{\mathbf{x}} + \mathbf{Q}^H\tilde{\mathbf{n}} = \mathbf{R}\underline{\mathbf{x}} + \mathbf{Q}^H\tilde{\mathbf{n}} \qquad (10)$$

Now a similar SIC decision rule as in Eq. (8) can be applied for the permuted layer symbol vector $\underline{\mathbf{x}}$. No matrix inversion is needed when applying the SIC decision rule.

In OFDM systems, the effective channel matrix **H** may be defined in frequency domain for each subcarrier.

Since adjacent subcarriers may experience correlated channel realizations, QR factorization may not need to be performed on the channel matrix at each subcarrier. Depending on the channel condition, it may be sufficient to perform QR factorization on certain set of subcarriers. For example, this may entail performing QR factorization on subcarriers with reference symbols. In such a scenario, the subcarriers without reference symbols may be able to reuse QR factorization from their adjacent subcarriers with reference symbols.

SIC with optimal ordering

As mentioned previously, detection sequence of the received symbols is crucial for SIC operation. Generally, assuming perfect channel estimation such that $\Delta\mathbf{H} = \mathbf{0}$ and assuming no detection errors propagated from previous layers (interference portion in each layer in this case is accurately estimated and removed), the decomposed received SNR of each layer can be obtained as $SNR_k = |r_{kk}|^2 / \sigma_n^2$, for $k = 1,...,n_L$, where $r_{kk}$ is the $k$-th diagonal element in the upper triangular matrix **R**. In the following, for the sake of simplicity, $|r_{kk}|^2$ is referred to as the diagonal energy for layer symbol $k$.

In SIC with QR decomposition, detection is typically done in the order from $k = n_L$ to $k = 1$. Thus, known SIC methods with optimal ordering choose a permutation matrix **T** such that the resulting $|r_{kk}|$ is maximized sequentially from $k = n_L$ to $k = 1$. Mathematically, this problem can be described as a sequential optimization problem, for example

$$\max_{k=1}\left( \max_{k=2}\left( \ldots \left( \max_{k=n_L} r_{kk} \right) \right) \cdots \right),$$ over different permutations of columns of matrix estimate $\tilde{\mathbf{H}}$. It can be easily shown that at stage $k = m$, i.e., when maximizing $|r_{mm}|$ conditioned on $|r_{kk}|; k = m + 1,...,n_L$, there are $m!$ possible permutations of columns of the effective channel matrix estimate $\tilde{\mathbf{H}}$ and $(m-1)!$ of them maximize $|r_{mm}|$. Therefore, the above problem can be solved in the following way. Therefore, the above problem can be solved in the following way. First amongst $n_L!$ possible permutations of the columns of $\tilde{\mathbf{H}}$, the set of permutations that maximize $|r_{n_L n_L}|$ are found. As mentioned, there are $(n_L-1)!$ such permutations which maximize $|r_{n_L n_L}|$. Then, within this set of permutations, the $(n_L-2)!$ ones that maximize $|mL-1\ n_L-1|$ are extracted and the search continues until the desired permutation is reached. The resulting order does not necessarily mean $|r_{kk}|$ is in a descending order from $k = n_L$ to $k = 1$. This is motivated by a view that the layers for which detection is performed earlier may have error propagation issues as previously described when a wrong symbol decision made at an earlier layer renders the reconstructed interference portion from that symbol decision different from the actual interference portion such that the interference portion is not subtracted but becomes larger, resulting in a higher likelihood of wrong symbol decisions in subsequent layers. As such, it is desired to have reliable symbol decisions for layers detected earlier. Making symbol decisions for layers arranged in the order with the diagonal energy $|r_{kk}|$ being maximized for each layer from $k = n_L$ to $k = 1$ can satisfy that view. The optimal ordering here is also referred to as maximized diagonal-magnitude ordering.

Unfortunately, the above described optimal ordering requires QR factorization to be performed multiple times, i.e., $n_L!$ times in the worst case for $n_L$ layer symbols to ensure that the optimal ordering is correct. Such complexity is extremely high when $n_L$ becomes larger, for example for 4 or 8 antenna cases.

An alternative ordering, presumably the importance ordering, may be to estimate the transmit symbol energies $\{E_k\}$ for all layer symbols and make decision for layers from higher transmit symbol energies to lower ones. That would need extra complexity in estimating the transmit layer symbol energy from the effective channel matrix **H**. Also, that may not work well when all layer symbols have the same transmit symbol energy. In LTE, all layer symbols are actually transmitted with the same average symbol energy.

SIC with search based ordered layer detection

Embodiments of the present application are directed to providing a method of detection that has improved performance with respect to the existing ZF-SIC and MMSE-SIC schemes, and has a relatively low complexity.

As indicated above, MLD requires a full search over all possible combinations of a transmitted signal in the form of a transmitted vector. For $n_L$ layers and a modulation order $M$, there are $M^{n_L}$ possible vectors. Thus, for a larger number of layers and/or modulation orders, the complexity of MLD is too high. For example, with 64-QAM modulation and 4 layers, the MLD decision metric defined by Eq. (3) has to be calculated 16777216 ($64^4$) times within a short time for each reception of layer symbols, which is impractical for implementation on a low-power chip. For 64-QAM modulation and 8 layers, which is a possible scenario in LTE-A, the number of calculations of the MLD decision metric increases to 281474976710656 ($64^8$) times, which is extremely difficult to implement.

The application proposes a successive interference cancellation process which requires search over a set of hypothesized potential layer symbols in a set of ordered layers such that the overall computational complexity can be reduced.

In some embodiments, the size of the set of hypothesized layer symbols is determined by the diagonal energy, i.e., $|r_{kk}|^2$ for layer $k$, where $r_{kk}$ is the $k$-th diagonal element in the upper triangular matrix **R** as previously mentioned.

In some embodiments, $|r_{kk}|^2$ is maximized in a reverse order of the symbol importance, i.e., $|r_{kk}|^2$ is maximized in a descending order from $k = 1$ to $k = n_L$.

In some embodiments, a method according to the application may generally be described as involving the following steps.

For a symbol of a layer being detected first, a set of symbol decision hypotheses are determined. For each symbol decision hypothesis of the layer being detected, SIC is performed to determine symbol decision estimates for the symbols of the remaining layers. Each symbol decision hypothesis at one layer is also considered as a symbol decision estimate at the layer. The symbol decision estimates for all layers can form a symbol decision vector, which is dependent on the hypothesis of the symbol of the layer being detected first. Therefore, for each of the hypothesized symbols of the layer being detected first, a respective symbol decision vector is obtained. The set of those respective vectors is denoted by $S_{H_L}$. Obviously, the number of vectors in the set $S_{H_L}$ is equal to the number of hypothesized symbols for the layer being detected first.

The final decision on the symbol decision vector to be representative of the transmitted signal is made by calculating a likelihood measure between the received signal vector and signal vectors reconstructed from each of symbol decision vectors in the set $S_{H_L}$ and choosing the symbol decision vector that is most likely. The likelihood measure for a given symbol decision vector $\tilde{\mathbf{x}}$ can be defined as $L(\tilde{\mathbf{x}}) = -\|\mathbf{y} - \tilde{\mathbf{H}}\tilde{\mathbf{x}}\|^2$, based on the norm similarly as in Eq. (3), or equivalently $L(\tilde{\mathbf{x}}) = -\|\mathbf{v} - \mathbf{R}\tilde{\mathbf{x}}\|^2$ as the orthogonal rotational matrix **Q** can be separated from matrix $\tilde{\mathbf{H}}$ and removed from the norm calculation. The final decision $\hat{\mathbf{x}}$ is the one in the set $S_{H_L}$ that has the largest likelihood, i.e.,

$$\hat{\mathbf{x}} = \arg\max_{\tilde{\mathbf{x}} \in S_{H_L}} L(\tilde{\mathbf{x}}) .$$

For permuted symbol vector $\underline{\tilde{\mathbf{x}}}$, the likelihood measure may be written as $L(\underline{\tilde{\mathbf{x}}}) = -\|\underline{\mathbf{v} - \mathbf{R}\tilde{\mathbf{x}}}\|^2$

with the underlined notation denoting the permutation. As the size of the set $S_{H_L}$ can be controlled to be much smaller than the size of a full search set $S_{\text{Full}}$ used in the MLD, the computational complexity of the above detection process is much smaller than that of MLD.

The concept of determining multiple symbol hypotheses for a given layer is not necessarily limited to only the layer being detected first. In some embodiments, multiple hypotheses for multiple layers can be determined. Each layer may use a set of hypothesized symbols or symbol decision estimates. When performing SIC, for each combination of the hypothesized symbols across multiple layers detected earlier, the corresponding interference portion is reconstructed and subtracted from the received signal and then a slicer operation as described in Eq. (8) is performed to obtain a symbol decision estimate for each of subsequent layers. Those symbol decision estimates are dependent on the combination of the hypothesized symbols for multiple layers detected earlier. Together, they form a symbol decision vector also referred to herein as a symbol decision set. The number of symbol decision vectors is equal to the number of combinations of the hypothesized symbols for multiple layers detected earlier. Again, multiple symbol decision vectors can form a set $S_{H_L}$. Finally, the most likely symbol decision vector can be selected as previously mentioned.

SIC with ordered QR decomposition and search based ordered layer detection

In the SIC scheme disclosed herein, a QR decomposition is used. As a part of the QR decomposition, an internal ordering determination is performed such that the energy $|r_{kk}|^2$ of diagonal elements in the upper triangular matrix from the QR decomposition occurs in descending diagonal-magnitude order from $k = 1$ to $k = n_L$. This means that the symbol of the layer being detected first ($k = {}_n L$) has the least amount of diagonal energy. This is different from the SIC described earlier where the symbol with the largest energy, which is presumed to be the most important symbol, is detected first, i.e. when $|r_{kk}|^2$ is maximized from $k = n_L$ to $k = 1$. Another difference is that the search based layer detection with hypothesized symbols is now working in conjunction with an ordered QR decomposition.

There are several reasons for the proposed approach of making a decision for the symbol with the least energy first. For example, there is less concern with error propagation occurring in the first layer or early detected layers as the detection in the first layer or early detected layers is based on using a set of hypothesized symbols, which in some embodiments have covered all possible symbols. On the other hand, even if a wrong decision is made, its impact on error propagation is small as its associated energy is small and the subsequent layer has larger energy.

In some embodiments, from the layer with least energy to the layer with largest energy, the set size on the hypothesized symbols may become smaller as the layer symbol to be detected becomes stronger. That is different than the SIC with importance ordering. It is possible to apply the symbol energy dependent set size to the SIC with importance ordering. That means for early detected layers, a small set of hypothesized symbols is considered, but as the detection process proceeds to layers with less energy, the set of hypothesized symbols becomes larger. Such a process may still face the risk of strong error propagation as any wrong decision on the stronger layer symbol detected earlier may have a huge impact on other layer symbols to be detected later. Finally, one more reason is that this descending order can be easily achieved with a single QR decomposition, while the maximized diagonal-magnitude ordering may need multiple QR decompositions and the resulting computational complexity is higher.

In other embodiments, the set size on the hypothesized symbols depends on the energy $|r_{kk}|^2$ such that the SIC can work even with un-ordered QR decomposition.

Since $\mathbf{R}$ in Eq. (10) is an upper triangular matrix, the last, i.e., $n_L$ -th, element of $\mathbf{v}$ used for making symbol decision for layer $k = n_L$ is interference free but not necessarily noise-free. As such, an incorrect decision is still possible and that may then propagate to all remaining layers. To remedy that error propagation, a set of possible hypotheses are considered for the symbols of layers being detected earlier. This reduces the adverse effects of error propagation and may improve the overall performance. This works even when all layers experience almost the same transmit layer symbol energy as the ordering here is not based on the transmit layer symbol energy $\{E_k\}$ but based on the diagonal energy $\{|r_{kk}|^2$ in the decomposed upper triangular matrix$\}$.

Therefore, unlike previous SIC methods described above, in some embodiments of the present application it is proposed to consider a set of possible hypotheses for the data transmitted in the layers being detected earlier.

While the detailed description above pertains to discussion of using QR decomposition, it is to be understood that QL decomposition could be performed in a similar manner. While for QR decomposition the associated symbol-decision order is in a reverse order as compared to the predefined diagonal-magnitude order, for QL decomposition the associated symbol-decision order is in the same predefined diagonal-magnitude order.

The following examples show three different ways in which a set of symbol decision hypotheses for a given layer can be chosen.

In a first example, all of the signal points in the $L$ layers being detected earlier, i.e., $C_{n_L}, C_{n_L}\text{-}1,...,C_{n_L\text{-}L+1}$ (where $C_k$ refers to the constellation alphabet of layer symbol $\underline{x}_k$) are considered in the set of symbol decision hypotheses. In this case, no SIC needs to be performed from layer $k = n_L$ to $k = n_L\text{-}L+1$. As an example, if all of these layers have constellation of size $M$, there are $M^L$ hypotheses. $L$ can be fixed to control the computational complexity such that $L<<n_L$ for large number of layer symbols ($n_L$) and the number of hypotheses $M^L << M^{n_L}$, where $M^{n_L}$ is the one used in the MLD.

In a second example, when the constellation size has a larger number of signal points such as 128, 256 or higher, in order to reduce complexity, it is possible to consider a subset of signal points of the constellation $S_k$ as the set of hypothesized layer symbols. For example, for layer $k$, a symbol decision estimate $\underline{\tilde{x}}_k$ for this layer can be obtained by performing SIC based on Eq. (8). Here, the underline of $\underline{\tilde{x}}_k$ represents an ordering and it does not impact the interference construction and symbol decision. Such a method of using a subset of signal points in the constellation as a set of symbol decision hypotheses may be useful for WiMax or WiFi where the modulation may have a large signal point modulation type, such as 256-QAM.

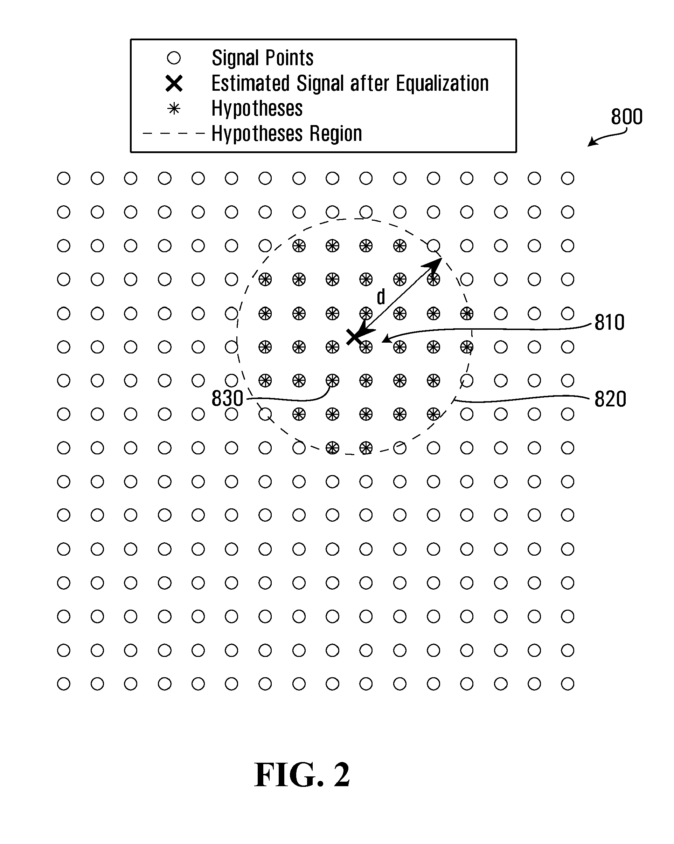

Here, $\underline{\tilde{x}}_k$ is not used as the final detected symbol for layer symbol $k$. Instead, all the signal points within Euclidean distance $d$ from $\underline{\tilde{x}}_k$ in the constellation are considered as hypotheses for detection of subsequent layers. The symbol decision estimate $\underline{\tilde{x}}_k$ is the output of a slicer function in Eq. (8). In some embodiments, the input to the slicer function, also referred to the estimated signal after equalizer, can be used to determine the set of hypothesized symbols. An example of such a determination process is illustrated in Fig. 2.

Fig. 2 illustrates a constellation 800 having 256 signal points. Fig. 2 may represent a selection of a set of signal points of the constellation 800 for a given layer. An estimated symbol after equalization, the input to the slicer function in Eq. (8) is tentatively determined and represented in Fig. 2 by an X 810. A circle 820 of radius $d$ defines the hypotheses region. The hypotheses region is shown to include 37 hypothesis signal points 830. Those signal points are considered as neighbouring symbol decision estimates and are used for the set of hypothesized symbols. With regard to the example of Fig. 2, instead of using all the signal points of the constellation as hypotheses for the given level, only the 37 signal points inside circle 820 are used as hypotheses for the given level.

As previously mentioned, the set of hypothesized symbols can be also based on a symbol decision estimate $\underline{\tilde{x}}_k$, which can be understood as the closet hypothesized symbol to the estimated signal from equalization, i.e., "x" as shown in Fig. 2. As this symbol decision estimate is one of the signal points in the entire constellation, its neighbouring decision estimates for a given circle of radius d can be also predetermined.

In some embodiments the distance $d$ can be a fixed value for easy implementation. In some embodiments the distance $d$ can be an adaptive value. For example, the value of $d$ may be inversely proportional to the diagonal energy of the $k$-th layer, i.e. $|r_{kk}|^2$. In some embodiments, the ordering of $|r_{kk}|^2$ can be removed. In other words, this can work with un-ordered QR decomposition or any form of ordered $|r_{kk}|^2$. For example, if $|r_{kk}|^2$ is maximized in a descending diagonal-magnitude order from $k = 1$ to $k = n_L$, this means the symbol-decision order from $k = n_L$ to $k = 1$ will be in an ascending order of $|r_{kk}|^2$ and also means a larger set of hypothesized symbols for layers being detected earlier but a smaller set of hypothesized symbols for layers being detected later. With that, we can consider using a set of hypothesized symbols for the first layer to search for a better symbol (single-layer search) or for the first two layers to search for a better symbol (two-layer search).

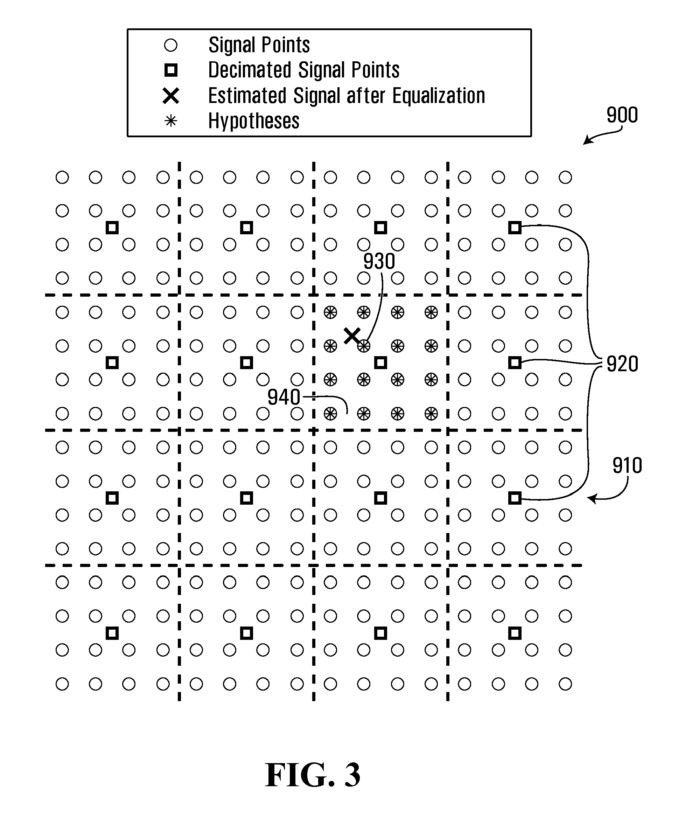

In a third example, when the constellation size is large, it is possible to define a lower order constellation for $\underline{x}_k$ by sub-dividing the constellation points of the original constellation. The signal points of the new lower order constellation are each located in the center of a group of $N$ signal points in the original constellation. An example of such a determination process is illustrated in Fig. 3 and described below.

A constellation decimation parameter $N$ defines the number of signal points in the new lower order constellation. In some embodiments, $N$ can be a fixed value for easy implementation. In some embodiments, $N$ can be an adaptive value. For example, $N$ may be proportional to the diagonal energy of the $k$-th layer, i.e. $|r_{kk}|^2$. This can be viewed as the diagonal SNR as the noise variance has been normalized and is common for all layers. The new constellation may be referred to as $S_k^{\text{new}}$. Then, the symbol decision estimate can be determined by using Eq. (8) except the set $C_k$ becomes $S_k^{\text{new}}$, and the output is denoted by $\tilde{\underline{x}}_k^{\text{new}}$.

Now the set of hypotheses for a given layer $k$ consists of all the signal points from the original constellation that fall within the group of signal points represented by decimated signal point $\hat{\underline{x}}_l^{\text{new}}$. In some embodiments it may be simpler to implement this procedure than the procedure of the second example described above because the decimated constellation can be predefined and there is no need for calculating the distance from $\hat{\underline{x}}_l$.

Fig. 3 illustrates a constellation 900 having 256 signal points. Like Fig. 2, Fig. 3 may represent selection of a set of signal points of the constellation 900 for a given layer. The original 256 signal point constellation is divided into 16 regions 910 and a signal point 920 is assigned to each of the 16 regions 910, thus making the original constellation 900 appear to be a lower order constellation. The signal points 920 assigned to each region 910 typically would be located in the middle of each region 910. Each region 910 is considered to be a hypotheses region that includes 16 of the original constellation signal points. An estimated signal after equalization $\hat{\underline{x}}_l$ is determined and represented in Fig. 3 by an X 930. Once the estimated signal is determined, that estimate is used to select the hypotheses region 940. The region 920 that is selected as the hypotheses region 940 is the region that has the lower order constellation signal point 920 closest to the estimate 930.

In addition to the consideration of different hypotheses for possible symbols of layers being detected earlier, the present application proposes sorting the layer ordering with a descending diagonal-magnitude order from $k = 1$ to $k = n_L$ (or equivalently with an ascending symbol-decision order following the layer symbol detection from $k = n_L$ to $k = 1$) during the QR decomposition such that possible symbol decisions are based on the symbols with least diagonal energy first. Because of the use of hypothesized symbol decision estimates for symbols being detected earlier in the process, it is possible to start with the symbol decision estimates for the layer with least diagonal energy. Such a process may help reduce error propagation as the error propagation from an incorrect symbol decision estimate made earlier may be small due to the small diagonal energy associated with the incorrect symbol decision estimate made earlier.

In some embodiments of the approach, since all possibilities for the symbol of the last $L$ layers are considered (those $L$ layers are detected first from layer $k = n_L$ to $k = n_L-L+1$), the symbol decision estimates of these layers and the neighboring subsequent layers ($n_L-L, n_L-L-1, \cdots$) may be more reliable. Therefore, in the SIC with the maximized diagonal-magnitude ordering, $|r_{kk}|$ does not necessarily need to be maximized starting from $k = n_L$. Instead, $|r_{kk}|$ may be maximized only from $k = 1$ to $k = n_L-L$ to make the detection of the later detected few layers (1,2,...) more reliable. In this case, the number of QR decompositions needed to be performed to maximize $|r_{kk}|$ from $k = 1$ to $k = n_L-L$ is in general less than the number of QR decompositions needed for the MMSE-SIC with optimal order. Here, the corresponding optimization problem can be expressed as

$$\max_{k=n_L-L}\left(\max_{k=n_L-L-1}\left(\ldots\left(\max_{k=1} r_{kk}\right)\right)\ldots\right) \text{ over different permutations of}$$
$$\text{columns of } \tilde{\mathbf{H}} \tag{11}$$

SIC with optimal ordering and search based layer detection

Implementing SIC with search based layer detection can work with optimal ordering as well. Here, the optimal ordering is to maximize $|r_{kk}|$ for each layer as it is being used in known SIC methods. The optimization problem can be obtained as

$$\max_{k=1}\left(\max_{k=2}\left(\ldots\left(\max_{k=n_L-L} r_{kk}\right)\right)\ldots\right) \text{ over different permutations of} \tag{12}$$

$$\text{columns of } \tilde{\mathbf{H}}$$

As can be seen in the example performance plots that follow, the performance of the MMSE-SIC with optimal ordering in QR decomposition and with a single-layer search ($L$=1) is very close to optimal MLD. However, the MMSE-SIC with optimal ordering still requires multiple QR factorizations to find the optimal ordering. In the worst case, a number equal to $\dfrac{n_L!}{L!}$ QR factorizations are needed to find the optimal ordering. The reason is that when forming permuted matrix $\tilde{\underline{\mathbf{H}}}$, there are $n_L$ choices for the first column (all columns of the non-permuted matrix $\tilde{\mathbf{H}}$), $n_L$-1 choices for the second column, and so on until the ($n_L$-$L$+1)-th column for which there are $L$ possible choices. Searching over the possible permutations of the remaining columns of $\tilde{\mathbf{H}}$ will not change the result of the maximization problem in Eq. (12). In the worst case, one needs to search all $\dfrac{n_L!}{L!}$ QR factorizations to solve Eq. (12).

MMSE-SIC with descending order and search based layer detection

The method described above can be implemented using a computationally efficient algorithm that performs ZF-SIC-Ordered or MMSE-SIC-Ordered equalization for remaining layers ($n_L$ -$L$,...,1) conditioned on a hypothetic symbol on each layer being detected earlier from $k = n_L$ to $k = n_L$-$L$+1, resulting in multiple symbol decision sets, each of which include potential detected symbol decision estimates for all layers. A metric similar to the MLD metric in Eq. (3) can then be used to choose one of the symbol decision sets. In some embodiments, MMSE criterion is preferred over ZF criterion.
To be more precise, the following steps are followed.
A first step can generally be considered to be QR factorization including ordering that involves matrix permutation. For the purposes of the present example of the computational algorithm Gram-Schmidt QR factorization is utilized. However, other QR factorization methods such as Householder reflections method or Given Rotations factorization can be easily adopted.
In a preliminary step, variables involved in the computation are initialized, in particular $\mathbf{T} = \mathbf{I}_{n_L}$, $\mathbf{R} = \mathbf{0}_{n_L}$, and $\mathbf{Q}$

= $\tilde{\mathbf{H}}$ for ZF or $\mathbf{Q} = \begin{bmatrix} \tilde{\mathbf{H}} \\ \sigma_n \mathbf{I}_{n_L} \end{bmatrix}$ for MMSE criterion.

For all of the layers 1 to $n_L$, a norm value is determined for the $i^{\text{th}}$ column of the $\mathbf{Q}$ matrix. This may be expressed algorithmically as for $i = 1,...,n_L$, $norm_i = \|\mathbf{q}_i\|^2$, where $\mathbf{q}_i$ is the $i$_th column of $\mathbf{Q}$.
For each of the layers in turn, multiple steps are performed. For the current layer, the column of $\mathbf{Q}$ with the maximum norm between the current layer and the last layer $n_L$ is determined. In the $\mathbf{Q}$ matrix and the permutation matrix $\mathbf{T}$, the column with the maximum norm and the present column are exchanged. Performing these two steps over all of the columns of $\mathbf{Q}$ results in arranging the layers in descending diagonal-magnitude order of the norm values. The values for the $\mathbf{R}$ matrix are also determined and the norm values for the columns subsequent to the current column are updated based on the reordering that has occurred and then the same process is repeated for each of the remaining columns to a maximum of $n_L$. The QR decomposition is considered to have failed if one norm value is negative or 0. When that happens, no symbol decision is made.
The above may be represented algorithmically as:

For $i = 1,...,n_L$.

   i) $k_i$ = arg max $_{l=i,...,n_L}$ norm$_l$, where $norm_i = \|\mathbf{q}_i\|^2$

   ii) Exchange column $i$ and $k_i$ in $\mathbf{Q}$ and $\mathbf{T}$

   iii)    $r_{i,i} = \sqrt{norm_i}$ ,    $\mathbf{q}_i = \mathbf{q}_i / r_{i,i}$

   iv) For $k = i + 1,...,n_L$

      1.   $r_{i,k} = \mathbf{q}_k = \mathbf{q}_k - r_{i,k}\mathbf{q}_i$

      2.   $norm_k = norm_k - r_{i,k}^2$   .

A second step involves multiplying the representation of the received signal by the Hermitian transform of the resultant matrix $\mathbf{Q}$, which can be represented algorithmically as calculating $\mathbf{v} = \mathbf{Q}^H\mathbf{y}$.

A third step involves using SIC to determine, for each symbol hypothesis, a permuted symbol decision set $\tilde{\mathbf{x}} = \{\tilde{x}_1,\tilde{x}_2,...,\tilde{x}_nL\}$ that includes a symbol decision estimate for each layer from $k = 1$ to $k = n_L$. This may be represented algorithmically as: for a given hypothesis $\tilde{\mathbf{x}}_L = \{\tilde{x}_{n_L},\tilde{x}_{n_L\text{-}1},\cdots,\tilde{x}_{n_L\text{-}L+1}\}$, determine symbol decision estimates for $k = n_L$ $-L$ to $k = 1$ similarly as in Eq. (8), i.e.,   $\tilde{x}_k = \underset{S_k}{\text{slice}}\left\{ \frac{1}{r_{kk}}\left( v_k - \sum_{m=k+1}^{n_L} r_{km}\tilde{x}_m\right)\right\}$ .   This is performed over all possible values of $\underline{\mathbf{x}}_L = \{\tilde{x}_{n_L},\tilde{x}_{n_L\text{-}1},\cdots,\tilde{x}_{n_L\text{-}L+1}\}$ to find the corresponding symbol decision estimates for layers from $k = n_L\text{-}L$ to $k = 1$.

A fourth step involves selecting a single symbol decision set from a plurality $S_{HL}$ containing all of the symbol decision sets with each corresponding to one hypothesized $\underline{\tilde{\mathbf{x}}}_L$ based on a likelihood measure. This may be represented algorithmically as   $\hat{\underline{\mathbf{x}}} = \underset{\tilde{\mathbf{x}} \in S_{H_L}}{\arg\max}\, L(\tilde{\mathbf{x}})$ ,   where $L(\tilde{\mathbf{x}})=-\|\underline{\mathbf{v}\text{-}\mathbf{R}\tilde{\mathbf{x}}}\|^2$ is a likelihood measured as previously mentioned.

It is noteworthy to mention that in a hardware implementation, it is not necessary to save all the possible symbol decision sets. For example, only two buffers are needed to store two symbol decision sets and the corresponding likelihood, a first buffer for storing the one corresponding to the largest likelihood calculated so far and a second buffer for the one currently being calculated. These two likelihood measures can be compared and the one with the larger likelihood is stored in the first buffer and the other one is discarded.

A fifth step involves reversing the permutation that was performed earlier as part of the ordering during QR factorization. This may be represented algorithmically as "find $\hat{\mathbf{x}}$ as $\hat{\mathbf{x}} = \mathbf{T}\hat{\underline{\mathbf{x}}}$ ".

It is possible to apply the optimal ordering described above, but only for layers without any hypothesized symbol decisions. For that, however, multiple QR factorizations are needed.

Complexity

A conventional SIC method with optimal ordering may require $n_L$! QR factorizations to confirm finding the optimal ordering. For example, 4!=24 and 8!=40320 QR factorizations are needed for 4 and 8 transmit antennas cases, respectively, to find the optimal detection ordering.

In comparison, only one QR factorization is needed in the proposed method with a descending diagonal-magnitude order (in QR decomposition) regardless of the number of layers in the received signal. The only extra computation required in the proposed method is calculating the likelihood measure for the respective symbol decision sets to find a most likely single decision set. The complexity in the likelihood calculation is small as compared with the one requiring multiple QR decompositions.

Simulation Results

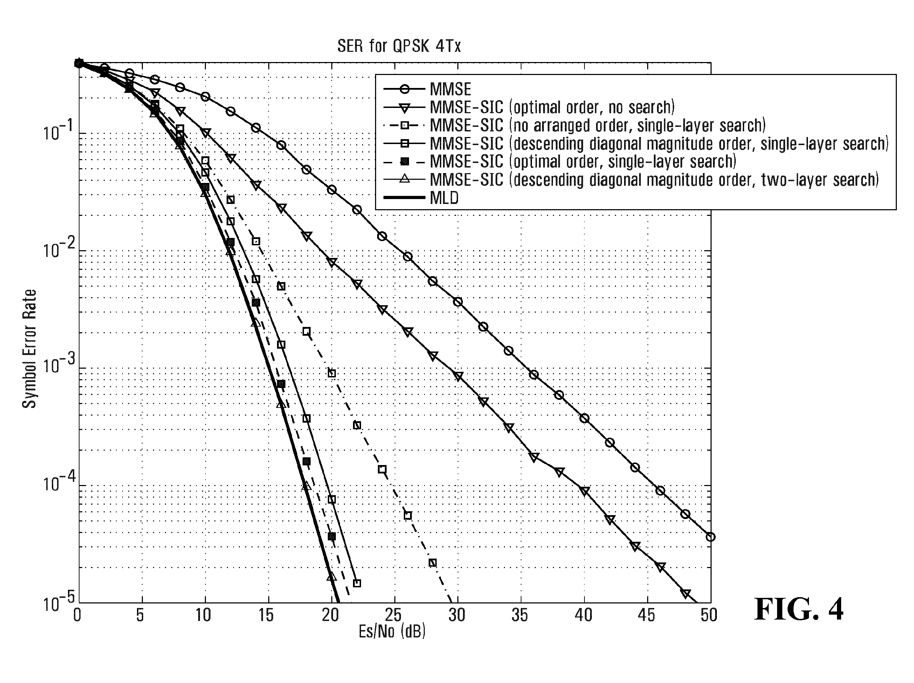

Simulation results for several examples are provided in Figs. 4 to 9.

In 2x2 MIMO case, it can be easily shown that the performance of the above described method using a full set of hypothesized symbols for the first layer is almost identical to the performance of MLD, but with less complexity if we consider a single-layer search, i.e., consider all possible symbols for layer $k$ = 2. As such, performance plots are not shown for the 2X2 MIMO case.

In the simulations generated for Figs. 4 to 9 the MMSE equalizer and corresponding MMSE QR factorization are used. Perfect channel knowledge, i.e., $\tilde{H}$ = **H,** is considered. The ordering used in SIC is based on the energy of diagonal elements of the upper triangular matrix from QR factorization. No arranged ordering means the search for the maximum norm is removed from the QR factorization on the effective channel matrix such that the energy of diagonal elements may not follow the ascending or descending order. All figures are for Rayleigh fading channel model and uncoded transmission. The number of layers is set to be the same as the number of transmit antennas, i.e., $n_L = n_T$. The MIMO channel gain in the original channel matrix is set to 1, i.e., $E\{|h_{ch,ij}|^2\}$ = 1. All layer symbols are transmitted with the same average energy. Hypotheses for the simulations in Figs. 4 to 9 for the first (and second) layer(s) to be detected are generated based on the first example described above in which all the points in the signal constellation are used.

Fig. 4 is a graphical plot of symbol error rate for QPSK modulation with 4x4 MIMO in Rayleigh fading. There are results for seven different equalizers in Fig. 4. The worst result is shown to be MMSE, the result being plotted with a circle datum and solid line. The second worst result is MMSE-SIC with optimal order but no layer search identified with an upside down triangle and solid line. The result from the MMSE-SIC with no arranged ordering, but a single-layer search ($L$ = 1), identified with square datum and dashed and dotted line, is shown to be better than the MMSE-SIC with optimal order but no layer search. The result from the MMSE-SIC with descending diagonal-magnitude order and a single-layer search ($L$ = 1), an ordering as proposed above, being identified with a square datum and solid line, is shown to be better than that from the MMSE-SIC with no arranged ordering and single-layer search. The result can be further improved by using a two-layer search. The MMSE-SIC with optimal order and a single-layer search ($L$ = 1), the result being identified with a square datum and dashed line, outperforms the MMSE-SIC counterpart with descending order and single-layer search, but not the MMSE-SIC counterpart with descending order and two-layer search (identified with a right side up triangle and solid line).

It is noteworthy to mention that the MMSE-SIC with optimal order requires multiple QR decompositions while the MMSE-SIC with descending order needs only one QR-decomposition. Therefore, the computational complexity of the former may still be higher than the latter even in the case when the latter has a two-layer search.

The best performance is for MLD, as discussed above and is illustrated with a solid line.

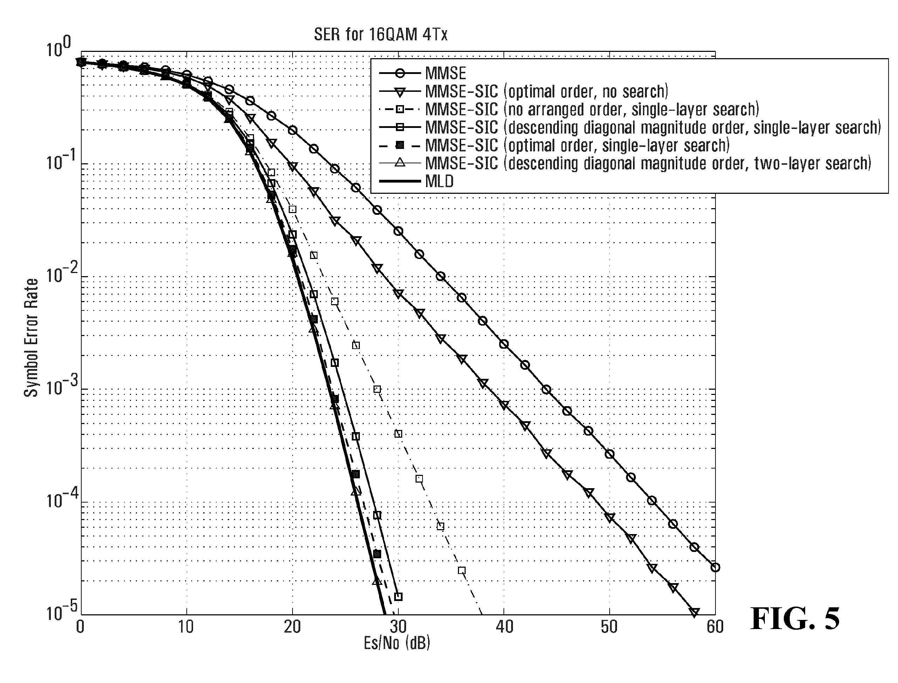

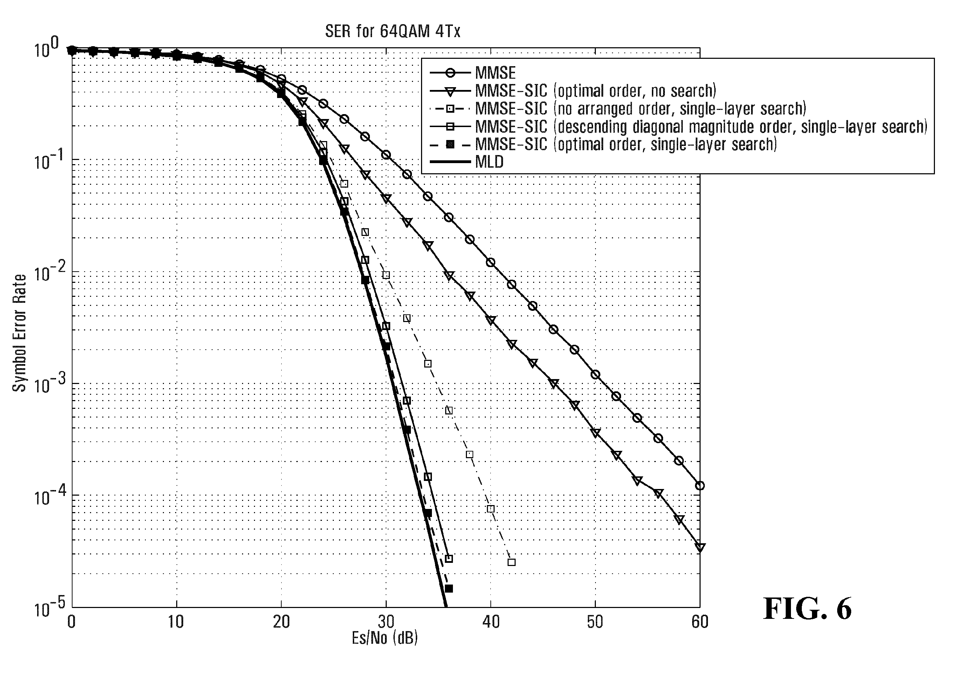

Fig. 5 is a graphical plot of symbol error rate for 16QAM modulation with 4x4 MIMO in Rayleigh fading. Fig. 6 is a graphical plot of symbol error rate for 64QAM modulation with 4x4 MIMO in Rayleigh fading. The ordering of worst performance to best performance for both Figs. 5 and 6 is the same as that of the results in Fig. 4, except that MMSE-SIC with descending diagonal-magnitude order and two-layer search is not shown in Fig. 6.

In 4x4 MIMO case, the performance difference between MLD and the proposed method (For example, MMSE-SIC with descending order and a single-layer search) at $SER$=10$^{-3}$ is about 1.6 dB, 1.2 dB and 0.9 dB for QPSK, 16-QAM and 64-QAM, respectively. Also, the performance of the MMSE-SIC with optimal order and a single-layer search is about 0.9 dB better than the one with descending order and a single-layer search. Again, MMSE-SIC with optimal order requires multiple QR decompositions and its computational complexity may be too high for a practical implementation. The MMSE-SIC with descending order and a two-layer search provides almost the same performance as the MLD for QPSK and 16QAM. As the number of signal points in the signal constellation (for example in the case of 64QAM) becomes larger the complexity may increase to perform a two-layer search. In that case, MMSE-SIC with single-layer search can provide a good trade-off between the detection performance and computational complexity.

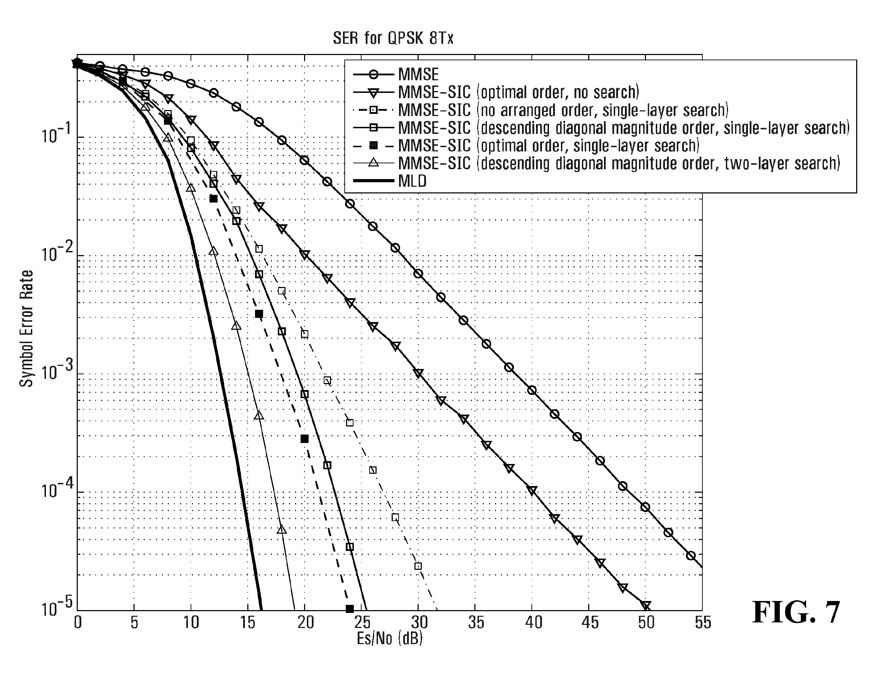

Fig. 7 is a graphical plot of symbol error rate for QPSK modulation with 8x8 MIMO in Rayleigh fading. Performance plots for the same set of equalizers are shown in Fig. 7 as shown in Figs. 4 and 5, and the same ordering of performance occurs.

In the 8x8 MIMO case for QPSK, the performance difference between MLD and the proposed method with $L$ = 1 is about 6.7 dB at $SER$=10$^{-3}$, but the proposed method (MMSE-SIC with descending order and a single-layer search) is about 11 dB better than the MMSE-SIC with optimal order but no layer search at the same SER level. The MMSE-SIC with optimal order and a single-layer search is about 1.4dB better than the MMSE-SIC with descending order and a single-layer search at $SER$=10$^{-3}$. In case of a two-layer search ($L$ = 2), the MMSE-SIC with descending order and a two-layer search is shown better than the one with optimal order and a single-layer search. Again, the latter requires multiple QR decompositions and its computational complexity may be still higher than the former with descending order and a two-layer search.

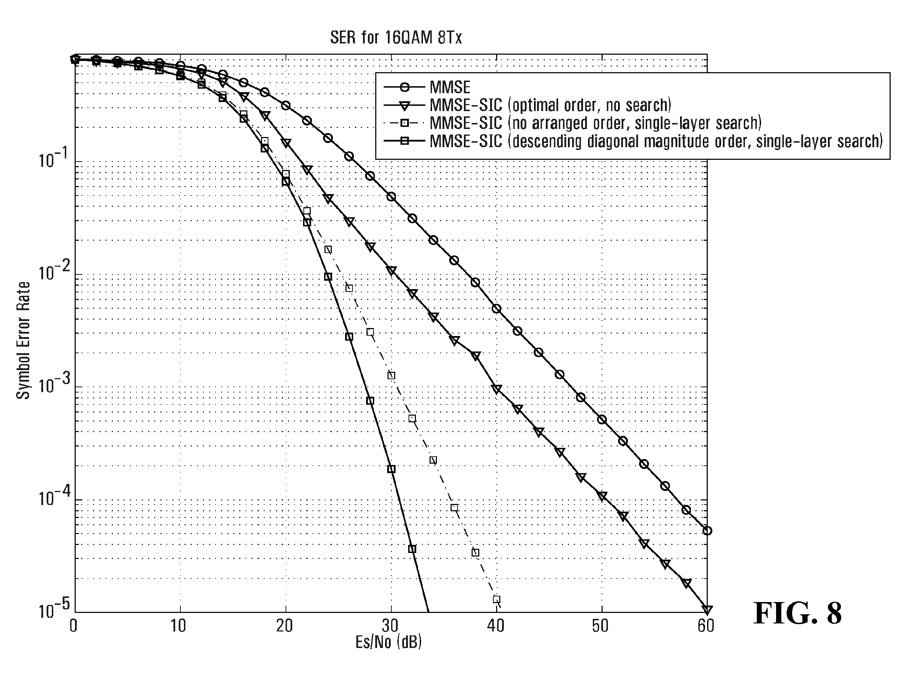

Fig. 8 is a graphical plot of symbol error rate for 16QAM modulation with 8x8 MIMO in Rayleigh fading. There are results for four different equalizers in Fig. 8. The complexity of the MLD for 8x8 MIMO and 16QAM is too high and as such not implemented for this case. The worst result is shown to be MMSE, the result being identified with a circle datum and solid line. The result from the MMSE-SIC with optimal order but no layer search identified with upside down triangle datum and solid line is shown to be better. The result from the MMSE-SIC with no ordering but a single layer search ($L$ = 1), identified with square datum and dashed and dotted line, is shown better than the MMSE-SIC with no layer search. The performance of the MMSE-SIC with the descending order and a single-layer search ($L$ = 1), being identified with a square datum and solid line, is the best of all the plots in this figure. The performance of MLD is not shown in Fig. 8 due to the high complexity of implementing MLD for 8 layers and 16QAM.

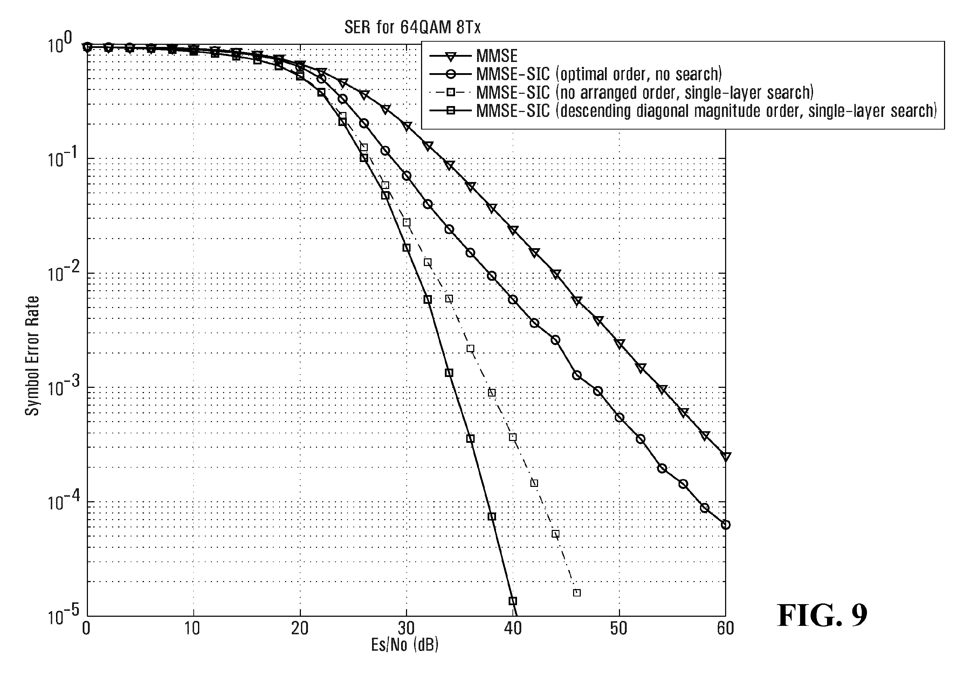

Fig. 9 is a graphical plot of symbol error rate for 64QAM modulation with 8x8 MIMO in Rayleigh fading. Performance plots for the same set of equalizers as shown in Fig. 8 are plotted in Fig. 9 and the same ordering of performance occurs. The performance of MLD is not shown in Fig. 9 due to the high complexity of implementing MLD for 8 layers and 64QAM.

The sorting algorithm on the QR factorization is very simple in comparison with the classical SIC methods with optimal order requiring multiple QR decompositions. Only one QR factorization is performed in embodiments of the proposed method utilizing descending ordering for arbitrary number of layers.

In some embodiments the complexity of the proposed algorithm is low in comparison with MLD.

The complexity of the proposed methods can be adaptively adjusted for high modulation orders.

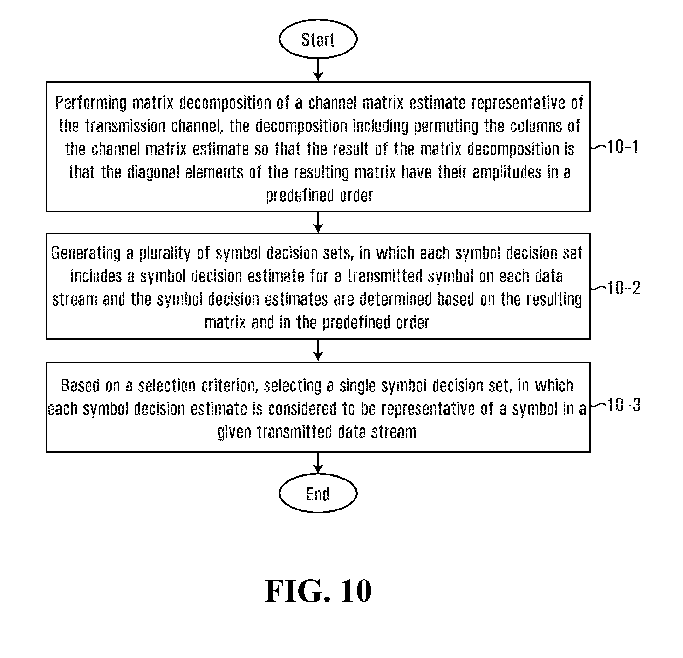

A general method for detecting symbols transmitted in a signal over a transmission channel on a plurality of layers in a multiple input multiple output (MIMO) communication system will now be described with reference to Fig. 10. Fig. 10 is a flow chart describing steps in the method.

A first step 10-1 involves performing matrix decomposition of a channel matrix estimate representative of the transmission channel, the decomposition includes permuting the columns of the channel matrix estimate so that the result of the matrix decomposition is that diagonal elements of the resulting matrix have their amplitudes in a predefined order.

A second step 10-2 involves generating a plurality of symbol decision sets, in which each symbol decision set includes a symbol decision estimate for a transmitted symbol on each data stream and the symbol decision estimates are determined based on the resulting matrix and in the predefined order.

A third step 10-3 involves, based on a selection criterion, selecting a single symbol decision set, in which each symbol decision estimate is considered to be representative of a symbol in a given transmitted data stream.

In some embodiments, the method may also include estimating the transmission channel from the received antenna signals.

In some embodiments, performing matrix decomposition of a channel matrix estimate may further include decomposing the channel matrix estimate into an orthogonal matrix and a triangular matrix according to a predefined diagonal-magnitude order, wherein permuting columns of the channel matrix estimate causes the magnitude of each element on a main diagonal of the triangular matrix to be arranged in the predefined diagonal-magnitude order and permuting a vector representing the symbol decision set during the matrix decomposition in a manner consistent with the permuting of the columns of the channel matrix estimate, which enables the order of determining the symbol decision estimates in the symbol decision set to be the predefined diagonal-magnitude order.

The predefined diagonal-magnitude order may be any one of: a descending diagonal-magnitude order with the magnitude of each element on the main diagonal of the triangular matrix decreasing from the first column to the last column; an ascending diagonal-magnitude order with the magnitude of each element on the main diagonal of the triangular matrix increasing from the first column to the last column; and a maximized diagonal-magnitude ordering with the magnitude of each element on the main diagonal of the triangular matrix being maximized by permuting the columns of the channel estimate matrix and the orthogonal matrix which correspond to elements on the main diagonal that are not yet maximized.

In some embodiments, performing matrix decomposition of a channel matrix estimate may further include noise-decorrelating the received antenna signals and rotating the noise-decorrelated signal by using an orthogonal matrix from the matrix decomposition of the channel matrix estimate.

In some embodiments, generating a plurality of symbol decision sets includes selecting a number of data streams for which symbol decision estimates will be determined based on selection of symbol decision hypotheses. For each data stream that symbol decision estimates will be determined based on selection of symbol decision hypotheses, at least two possible symbol decision hypotheses are determined based on a symbol decision estimate of that data stream. A symbol decision set is formed by selecting the symbol decision hypotheses for each data stream in which symbol decisions are based on symbol decision hypotheses and based on the selected symbol decision hypotheses, further determining one value for each remaining symbol decision estimate in the symbol decision set.

In some embodiments, determining one value for each remaining symbol decision estimate in the symbol decision set may include determining each symbol decision estimate by performing successive interference cancellation (SIC).

In some embodiments, performing SIC may include the following additional steps. For a symbol decision estimate in a symbol decision set, performed in the symbol decision order associated with the predefined diagonal-magnitude order 1) reconstructing an interference portion caused by previously determined symbol decision estimates, 2) subtracting the reconstructed interference portion from the corresponding signal element of the rotated and noise-decorrelated received signal, which is obtained by noise-decorrelating the received antenna signals followed by rotating the noise-decorrelated received signal using an orthogonal matrix from the matrix decomposition of the channel matrix estimate and 3) determining a symbol decision estimate based on the corresponding interference subtracted signal element.

In some embodiments, determining a symbol decision estimate based on the corresponding interference subtracted signal element may include determining a symbol decision by mapping the corresponding interference subtracted signal element to a signal point in a constellation used for transmitting the transmitted symbols and when the symbol decision is for a data stream in which symbol decision estimates are based on symbol decision hypotheses, determining at least two signal points in a constellation used for transmitting the transmitted symbols for the symbol decision hypotheses.

In some embodiments selecting a single symbol decision set may include for each of the symbol decision sets in the plurality of the symbol decision sets, determining a selection criterion as a likelihood measure between the symbol decision set and the transmitted symbols and based on the likelihood measure for each of the plurality of symbol decision sets, selecting a single symbol decision set to be representative of the transmitted symbols.

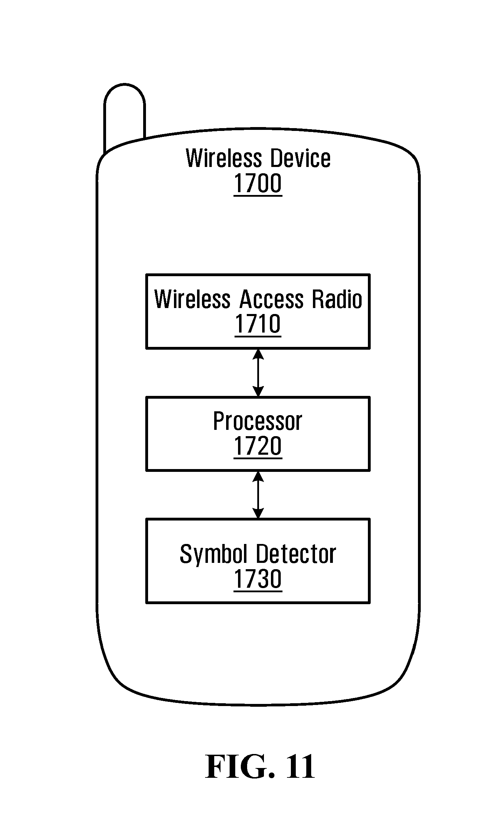

Referring now to Fig. 11, shown is a block diagram of an example wireless device 1700 adapted to communicate using circuit switched and packet switched communications separately or simultaneously. The wireless device 1700 has a processor 1720 coupled to a wireless access radio 1710. The wireless access radio 1710 is broadly considered to be configured to communicate with wireless networks. In some embodiments, the wireless access radio may be implemented as more than one wireless access radio, each one configured to access a different type of network. The wireless device also has Symbol Detector 1730 that is configured to operate in a manner consistent with the methods described above for detecting symbols based on a matrix decomposition and search based ordered layer detection. Symbol Detector 1730, while illustrated as a single functional block in Fig. 11, may also be considered to have multiple sub-components that may implement separate functions, such as respective steps of Fig. 10. In some embodiments the wireless device 1700 is a multimode mobile wireless device.

In operation, the wireless device 1700 is adapted to communicate wirelessly over one or more types of wireless communication networks, for example a Universal Telecommunications Radio Access Network (UTRAN) network and a Generic Access Network (GAN), such as a Wi-Fi network, using the wireless access radio 1710. The wireless device 1700 is adapted to communicate using circuit switched and packet switched communications separately or simultaneously. In some embodiments, wireless access radio 1710 is configured to receive information broadcast by a network comprising characteristics pertaining to one or more telecommunication cells in the network. In some embodiments, the processor 1720 is configured to execute the Symbol Detector 1730. The Symbol Detector 1730 is configured to perform the various methods described above.

The Symbol Detector 1730 can be implemented using one of software, hardware, and firmware, or a suitable combination thereof. For example, application specific integrated circuits (ASIC) or field programmable gate arrays (FPGA) may be used to implement the function in hardware. To implement the function in software, in some embodiments, a microprocessor may be used capable of executing computer readable program code instructions on a computer-readable medium.

The device of Fig. 11 shows only a wireless access radio 1710, a processor 1720 and Symbol Detector 1730 relevant to performing symbol detection as described herein. It is to be understood that practical implementations would include additional physical elements or functionality, or both, to that shown, for example, a wideband filter and FFT based spectral analysis tool or a narrowband filter, or both, depending on the type of processing being performed, at least one ADC, at least one mixer for down converting received signals, and other receive signal circuitry. The preceding list is not considered to be exhaustive, but to act as an example of such additional physical elements or functionality.

Another Wireless device

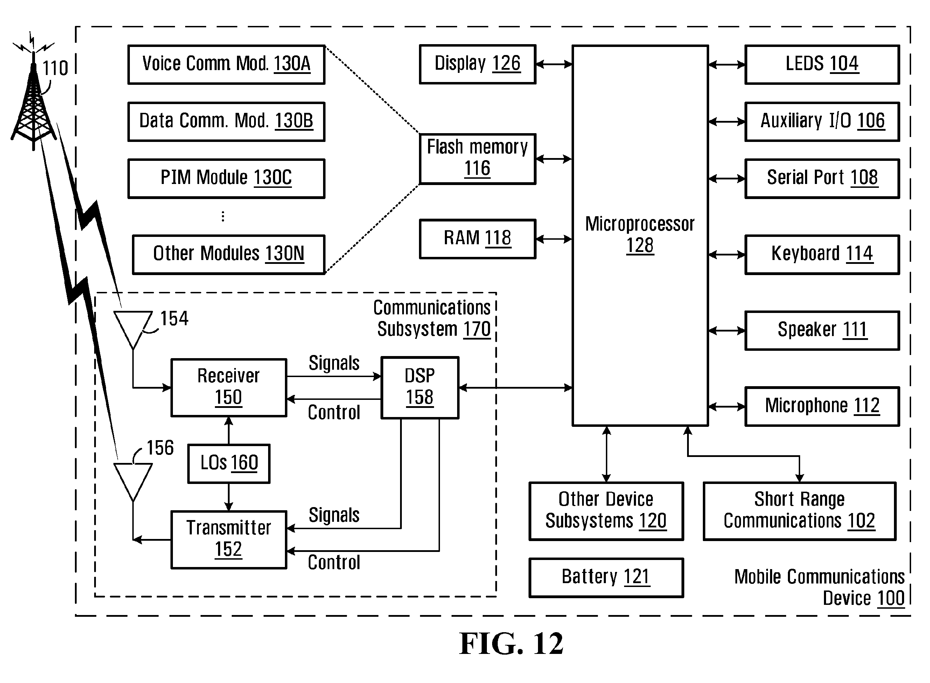

Referring now to Fig. 12, shown is a block diagram of another wireless device 100 that may implement any of the wireless device methods described herein. The wireless device 100 is shown with specific components for implementing features described above, for example those generally illustrated in Fig. 10. It is to be understood that the wireless device 100 is shown with very specific details for exemplary purposes only.

A processing device (a microprocessor 128) is shown schematically as coupled between a keyboard 114 and a display 126. The microprocessor 128 is a type of processor with features similar to those of the processor 1720 of the wireless device 1700 shown in Fig. 11. The microprocessor 128 controls operation of the display 126, as well as overall operation of the wireless device 100, in response to actuation of keys on the keyboard 114 by a user.

The wireless device 100 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the wireless device 100 are shown schematically. These include: a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The wireless device 100 may have a battery 121 to power the active elements of the wireless device 100. The wireless device 100 is in some embodiments a two-way radio frequency (RF) communication device having voice and data communication capabilities. In addition, the wireless device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the wireless device 100 may also be stored to the RAM 118.

The microprocessor 128, in addition to its operating system functions, enables execution of software applications on the wireless device 100. A predetermined set of software applications that control basic device operations, such as a voice communications module 130A and a data communications module 130B, may be installed on the wireless device 100 during manufacture. In addition, a personal information manager (PIM) application module 130C may also be installed on the wireless device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture.

Communication functions, including data and voice communications, are performed through the communication subsystem 170, and possibly through the short-range communications subsystem 102. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. In some embodiments, the communication subsystem 170 includes a separate antenna arrangement (similar to the antennas 154 and 156) and RF processing chip/block (similar to the Receiver 150, LOs 160 and Transmitter 152) for each RAT, although a common baseband signal processor (similar to DSP 158) may be used for baseband processing for multiple RATs. The specific design and implementation of the communication subsystem 170 is dependent upon the communication network in which the wireless device 100 is intended to operate. For example, the communication subsystem 170 of the wireless device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Universal Mobile Telecommunication System (UMTS), Long Term Evolution (LTE), etc. Examples of CDMA include 1X and 1x EV-DO. The communication subsystem 170 may also be designed to operate with an 802.11 Wi-Fi network, and/or an 802.16 WiMAX network. Other types of data and voice networks, both separate and integrated, may also be utilized with the wireless device 100.

Network access may vary depending upon the type of communication system. For example, in the Mobitex™ and DataTAC™ networks, wireless devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the wireless device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the wireless device 100. In addition, the display 126 may also be utilized in voice communication mode, for example, to display the identity of a calling party, the duration of a voice call, or other voice call related information.

The short-range communications subsystem 102 enables communication between the wireless device 100 and other proximate systems or devices, which need not necessarily be similar devices. For example, the short range communications subsystem may include an infrared device and associated circuits and components, or a Bluetooth™ communication module to provide for communication with similarly-enabled systems and devices.

It should be understood that as used herein, terms such as coupled, connected, electrically connected, in signal communication, and the like may include direct connections between components, indirect connections between components, or both, as would be apparent in the overall context of a particular embodiment. The term coupled is intended to include, but not be limited to, a direct electrical connection.

Numerous modifications and variations of the present application are possible in light of the above teachings. It is therefore to be understood that within the scope of the appended claims, the aspects of the application may be practised otherwise than as specifically described herein.

## Claims

1. A method for detecting symbols in a number of received antenna signals formed from a transmission channel and a number of transmitted data streams, the method comprising:

   performing (10-1) matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order;
   generating (10-2) a plurality of symbol decision sets, in which each symbol decision set includes a symbol decision estimate for a transmitted symbol on each data stream and the symbol decision estimates are determined based on the resulting matrix and in the predefined order; and
   based on a selection criterion, selecting (10-3) a single symbol decision set, in which each symbol decision estimate is considered to be representative of a symbol in a given transmitted data stream.

2. The method of claim 1, further comprising estimating the transmission channel from the received antenna signals.

3. The method of claim 1 or claim 2 wherein performing (10-1) matrix decomposition of a channel matrix estimate comprises:

   decomposing the channel matrix estimate into an orthogonal matrix and a triangular matrix according to a predefined diagonal-magnitude order, wherein permuting columns of the channel matrix estimate causes the magnitude of each element on a main diagonal of the triangular matrix to be arranged in the predefined diagonal-magnitude order; and
   permuting a vector representing the symbol decision set during the matrix decomposition in a manner consistent with the permuting of the columns of the channel matrix estimate, which enables the order of determining the symbol decision estimates in the symbol decision set to be the predefined diagonal-magnitude order.

4. The method of claim 3, wherein the triangular matrix is either:

   an upper triangular matrix, for which the matrix decomposition is QR decomposition and the order of determining the symbol decision estimates is in a reverse order as compared to the predefined diagonal-magnitude order; or
   a lower triangular matrix, for which the matrix decomposition is QL decomposition and order of determining the symbol decision estimates is in the same predefined diagonal-magnitude order.

5. The method of claim 3 or claim 4, wherein the predefined diagonal-magnitude order is at least one of:

a descending diagonal-magnitude order with the magnitude of each element on the main diagonal of the triangular matrix decreasing from the first column to the last column;

an ascending diagonal-magnitude order with the magnitude of each element on the main diagonal of the triangular matrix increasing from the first column to the last column; and

a maximized diagonal-magnitude ordering with the magnitude of each element on the main diagonal of the triangular matrix being maximized by permuting the columns of the channel estimate matrix and the orthogonal matrix which correspond to elements on the main diagonal that are not yet maximized.

6. The method of any one of claims 1 to 5 further comprising:

noise-decorrelating the received antenna signals; and

rotating the noise-decorrelated signal by using an orthogonal matrix from the matrix decomposition of the channel matrix estimate.

7. The method of any one of claims 3 to 6, wherein decomposing the channel matrix estimate into the orthogonal matrix and the triangular matrix according to a predefined diagonal-magnitude order comprises performing a single matrix decomposition.

8. The method of any one of claim 1 to 7, wherein generating (10-2) a plurality of symbol decision sets further comprises:

selecting a number of data streams for which symbol decision estimates will be determined based on selection of symbol decision hypotheses;

for each data stream that symbol decision estimates will be determined based on selection of symbol decision hypotheses, determining at least two possible symbol decision hypotheses based on a symbol decision estimate of that data stream;

forming a symbol decision set by:

selecting the symbol decision hypotheses for each data stream in which symbol decisions are based on symbol decision hypotheses; and

based on the selected symbol decision hypotheses, further determining one value for each remaining symbol decision estimate in the symbol decision set.

9. The method of claim 8, wherein determining at least two possible symbol decision hypotheses based on the symbol decision estimate of that data stream comprises one of:

determining a set of signal points comprising all of the signal points of a signal constellation used for transmitting the transmitted symbols as symbol decision hypotheses for a given transmitted data stream; or

determining a subset of signal points of a signal constellation used for transmitting the transmitted symbols as symbol decision hypotheses for the given transmitted data stream, the subset of signal points neighboring a symbol decision estimate.

10. The method of claim 9, wherein determining the subset of the signal points of the signal constellation comprises:

determining the subset of signal points in the signal constellation within a radius d of the symbol decision estimate; or

wherein when the signal constellation has been divided into a plurality of subsets of signal points, each subset being associated with a signal point for a lower order signal constellation, determining one subset of signal points within the plurality of subsets, the one subset being selected based on the signal point of the lower order signal constellation that is closest to the symbol decision estimate.

11. The method of any one of claims 8 to 10, wherein further determining one value for each remaining symbol decision estimate in the symbol decision set comprises:

determining each symbol decision estimate by performing successive interference cancellation (SIC).

12. The method of claim 11, wherein performing SIC comprises:

for a symbol decision estimate in a symbol decision set, performed in the symbol decision order associated with the predefined diagonal-magnitude order;
reconstructing an interference portion caused by previously determined symbol decision estimates;
subtracting the reconstructed interference portion from the corresponding signal element of the rotated and noise-decorrelated received signal, which is obtained by noise-decorrelating the received antenna signals followed by rotating the noise-decorrelated received signal using an orthogonal matrix from the matrix decomposition of the channel matrix estimate; and
determining a symbol decision estimate based on the corresponding interference subtracted signal element.

13. The method of claim 12, wherein determining a symbol decision estimate based on the corresponding interference subtracted signal element comprises:

determining a symbol decision by mapping the corresponding interference subtracted signal element to a signal point in a constellation used for transmitting the transmitted symbols; and
when the symbol decision is for a data stream in which symbol decision estimates are based on symbol decision hypotheses, determining at least two signal points in a constellation used for transmitting the transmitted symbols for the symbol decision hypotheses.

14. The method of any one of claims 1 to 13, wherein selecting (10-3) a single symbol decision set comprises:

for each of the symbol decision sets in the plurality of the symbol decision sets, determining a selection criterion as a likelihood measure between the symbol decision set and the transmitted symbols; and
based on the likelihood measure for each of the plurality of symbol decision sets, selecting a single symbol decision set to be representative of the transmitted symbols.

15. The method of any one of claims 1 to 14, wherein selecting (10-3) a single symbol decision set further comprises:

permuting a vector representing the symbol decisions in order to reverse the permuting performed during the matrix decomposition.

16. A wireless communication device (100,110,1700) comprising:

a plurality of receive antennas configured to receive symbols formed from a transmission channel and a number of transmitted data streams;
a symbol detector (1730) configured to:

perform (10-1) matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order;
generate (10-2) a plurality of symbol decision sets, in which each symbol decision set includes a symbol decision estimate for a transmitted symbol on each data stream and the symbol decision estimates are determined based on the resulting matrix and in the predefined order; and
based on a selection criterion, select (10-3) a single symbol decision set, in which each symbol decision estimate is considered to be representative of a symbol in a given transmitted data stream.

17. The wireless communication device of claim 16, wherein the wireless communication device is a base station (110), a relay station or user equipment (UE)(100,1700).

18. A computer-readable medium having stored thereon computer executable instructions, that when executed by a processor, cause the processor to perform a method, the method comprising:

performing (10-1) matrix decomposition of a channel matrix estimate representative of the transmission channel, the decomposition comprising permuting the columns of the channel matrix estimate so that the result of the matrix decomposition is that diagonal elements of the resulting matrix have their amplitudes in a predefined order;
generating (10-2) a plurality of symbol decision sets, in which each symbol decision set includes a symbol decision estimate for a transmitted symbol on each data stream and the symbol decision estimates are determined based on the resulting matrix and in the predefined order; and
based on a selection criterion, selecting (10-3) a single symbol decision set, in which each symbol decision estimate is considered to be representative of a symbol in a given transmitted data stream.

$12_1$

$12_{n_T}$

$17_1$

$17_{n_R}$

10

15

# FIG. 1

FIG. 2

FIG. 3

FIG. 4

FIG. 5

FIG. 6

SER for QPSK 8Tx

Legend:
- —◯— MMSE
- —▽— MMSE-SIC (optimal order, no search)
- ·-□-· MMSE-SIC (no arranged order, single-layer search)
- —⊟— MMSE-SIC (descending diagonal magnitude order, single-layer search)
- – ■ – MMSE-SIC (optimal order, single-layer search)
- —△— MMSE-SIC (descending diagonal magnitude order, two-layer search)
- —— MLD

Y-axis: Symbol Error Rate

X-axis: Es/No (dB)

**FIG. 7**

EP 2 804 332 A1

SER for 16QAM 8Tx

Symbol Error Rate

Es/No (dB)

Legend:
- MMSE
- MMSE-SIC (optimal order, no search)
- MMSE-SIC (no arranged order, single-layer search)
- MMSE-SIC (descending diagonal magnitude order, single-layer search)

**FIG. 8**

EP 2 804 332 A1

SER for 64QAM 8Tx

FIG. 9

EP 2 804 332 A1

Start

Performing matrix decomposition of a channel matrix estimate representative of the transmission channel, the decomposition including permuting the columns of the channel matrix estimate so that the result of the matrix decomposition is that the diagonal elements of the resulting matrix have their amplitudes in a predefined order ⟋10-1

Generating a plurality of symbol decision sets, in which each symbol decision set includes a symbol decision estimate for a transmitted symbol on each data stream and the symbol decision estimates are determined based on the resulting matrix and in the predefined order ⟋10-2

Based on a selection criterion, selecting a single symbol decision set, in which each symbol decision estimate is considered to be representative of a symbol in a given transmitted data stream ⟋10-3

End

# FIG. 10

Wireless Device
1700

Wireless Access Radio
1710

Processor
1720

Symbol Detector
1730

**FIG. 11**

**FIG. 12**

EP 2 804 332 A1

Europäisches
Patentamt

European
Patent Office

Office européen
des brevets

# EUROPEAN SEARCH REPORT

Application Number

EP 13 16 7561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/181321 A1 (MILLINER DAVID L [US] ET AL) 31 July 2008 (2008-07-31)<br>* abstract *<br>* paragraphs [0022] - [0033] *<br>* figures 2, 3 *<br>----- | 1-18 | INV.<br>H04B7/08<br>H04B7/04<br>H04L25/03 |
| X | US 2009/003476 A1 (ROG ANDREY L [RU] ET AL) 1 January 2009 (2009-01-01)<br>* abstract *<br>* paragraphs [0016] - [0019], [0031] - [0075] *<br>* figures 2, 3 *<br>----- | 1-18 | |
| A | US 2007/286313 A1 (NIKOPOUR-DEILAMI HOSEIN [CA] ET AL) 13 December 2007 (2007-12-13)<br>* abstract *<br>* paragraphs [0011] - [0024], [0037] - [0065] *<br>* figures 1-3 *<br>----- | 1-18 | |
| A | US 2012/082256 A1 (GAUR SUDHANSHU [US] ET AL) 5 April 2012 (2012-04-05)<br>* paragraphs [0009] - [0011], [0057] - [0066] *<br>* figures 5, 6 *<br>----- | 1-18 | TECHNICAL FIELDS SEARCHED (IPC)<br><br>H04B<br>H04L |
| A | WATERS D W ET AL: "The sorted-QR chase detector for multiple-input multiple-output channels",<br>WIRELESS COMMUNICATIONS AND NETWORKING CONFERENCE, 2005 IEEE NEW ORLEANS, LA, USA 13-17 MARCH 2005, PISCATAWAY, NJ, USA,IEEE,<br>vol. 1, 13 March 2005 (2005-03-13), pages 538-543, XP010791221,<br>DOI: 10.1109/WCNC.2005.1424558<br>ISBN: 978-0-7803-8966-3<br>* the whole document *<br>----- | 1-18 | |

The present search report has been drawn up for all claims

| Place of search | Date of completion of the search | Examiner |
|---|---|---|
| Munich | 8 October 2013 | Helms, Jochen |

EPO FORM 1503 03.82 (P04C01)

**ANNEX TO THE EUROPEAN SEARCH REPORT
ON EUROPEAN PATENT APPLICATION NO.**                    EP 13 16 7561

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2013

| Patent document cited in search report | | Publication date | Patent family member(s) | | Publication date |
|---|---|---|---|---|---|
| US 2008181321 | A1 | 31-07-2008 | US | 2008181321 A1 | 31-07-2008 |
| | | | US | 2011176642 A1 | 21-07-2011 |
| | | | WO | 2008094821 A2 | 07-08-2008 |
| US 2009003476 | A1 | 01-01-2009 | NONE | | |
| US 2007286313 | A1 | 13-12-2007 | CA | 2541567 A1 | 30-09-2007 |
| | | | US | 2007286313 A1 | 13-12-2007 |
| US 2012082256 | A1 | 05-04-2012 | CN | 102598523 A | 18-07-2012 |
| | | | EP | 2474104 A1 | 11-07-2012 |
| | | | JP | 2012533964 A | 27-12-2012 |
| | | | US | 2012082256 A1 | 05-04-2012 |
| | | | US | 2013243109 A1 | 19-09-2013 |
| | | | WO | 2011028301 A1 | 10-03-2011 |

EPO FORM P0459

For more details about this annex : see Official Journal of the European Patent Office, No. 12/82